(19)

Europäisches Patentamt
European Patent Office
Office européen des brevets

(11) **EP 2 000 188 A1**

(12) **EUROPEAN PATENT APPLICATION**
published in accordance with Art. 153(4) EPC

(43) Date of publication:
**10.12.2008 Bulletin 2008/50**

(21) Application number: **07739356.9**

(22) Date of filing: **22.03.2007**

(51) Int Cl.:
*A63F 13/00* *(2006.01)*   *A63F 13/12* *(2006.01)*
*G10L 13/00* *(2006.01)*   *G10L 13/02* *(2006.01)*

(86) International application number:
**PCT/JP2007/055913**

(87) International publication number:
**WO 2007/111225 (04.10.2007 Gazette 2007/40)**

(84) Designated Contracting States:
**DE FR GB**

(30) Priority: **27.03.2006 JP 2006086209**

(71) Applicant: **Konami Digital Entertainment Co., Ltd.**
**Minato-ku**
**Tokyo 107-8324 (JP)**

(72) Inventor: **YAMAKAWA, Makoto**
**Tokyo 107-8324 (JP)**

(74) Representative: **Rüger, Barthelt & Abel**
**Patentanwälte**
**Webergasse 3**
**73728 Esslingen (DE)**

(54) **GAME DEVICE, GAME PROCESSING METHOD, INFORMATION RECORDING MEDIUM, AND PROGRAM**

(57)     In a game device (200) that executes a game in virtual space where a plurality of players exist, a storage unit (201) stores parameters assigned to each of player characters and other characters indicating the mutual relationship between them. In a case where a plurality of characters utters sounds in the virtual space, a relationship degree calculating unit (203) calculates the mixing ratio of each of the sounds to be uttered based on a parameter stored in the storage unit (201). A sound output unit (202) mixes each of the respective sounds according to the obtained mixing ratio, so as to be appropriate for the mutual relationship between the characters and outputs the mixed sound.

FIG.2

**EP 2 000 188 A1**

**Description**

Technical Field

The present invention relates to a game device, game processing method, information recording medium, and program suitable for changing a sound to be uttered by a character in accordance with an opponent relationship and producing the changed sound in a game that takes place in virtual space.

Background Art

There are games that take place in virtual space and wherein each of a plurality of players connects his or her own game device to the game devices of the other players via a network, etc., so as to play against the other players, with spectators displayed as the background of the game. For example, in a baseball game, where a batted ball is going at the time of a homerun is displayed along with a baseball stand filled with spectators, as the cheers of the spectators are heard. Although the spectators do not directly participate in the game, the jeers and cheers from the spectators are incorporated in the game so as to express momentum, a realistic sensation, and cohesiveness during the game. Patent Literature 1 discloses a game program wherein a spectator can participate in the game to a degree that does not impact the progress of the match-up game. With this arrangement, a spectator predicts the winner or the score of the game and, if he or she gets the winner or score right, receives a gainful bonus the next time the spectator him/herself plays. Further, Patent Literature 2 discloses a game device wherein a support parameter of the spectators watching the game changes according to the behavior of the player character playing the game, and the ability of the player character is changed based on the support parameter. With this arrangement, the level of spectators support and the level of spectators cheering are introduced, making it possible for the player to be aware of the stance from which the spectators are watching, resulting in a more intense expression of a realistic sensation and cohesiveness of the game.

Patent Literature 1: Japanese Patent No. 3464469
Patent Literature 2: Japanese Patent No. 3560956

Disclosure of Invention

Problem to be Solved by the Invention

In a conventional game device, a spectator can select lines and actions from predetermined options, and participate in the game to a certain degree by jeering and cheering. Nevertheless, the conventional game device is not capable of determining to which player the cheers and jeers are directed or what type of opponent relationship (rival relationship) the character which jeers or cheers has with the player and producing different outputs accordingly. For this reason, in a case where jeers and cheers during a game occur simultaneously, it is difficult for the player to grasp the type of opponent relationship a character that uttered sound has with the player. Further, the player cannot play the game with an awareness of what type of players are playing the game and participating in the match-up.

The present invention has been made to overcome such problems, and it is an object of the present invention to provide a game device, game processing method, information recording medium, and program suitable for changing sound to be uttered by a character in accordance with an opponent relationship to attain a contrivance in a game that takes place in virtual space.

Means for Solving the Problem

A game device according to a first aspect of the present invention comprises a storage unit, a sound output unit, and a relationship degree calculating unit.
The storage unit stores parameters respectively assigned to among a plurality of character objects a player character object associated with a player and other character objects.
The sound output unit mixes the respective sounds to be uttered by the other character objects, and outputs the mixed sound.
The relationship degree calculating unit, in a case where the sounds to be uttered by any ones of a plurality of the other character objects overlap, calculates a value representing a relationship between each of the character objects uttering the sounds and the player character object based on a parameter stored in the storage unit.
The sound output unit acquires the mixing ratio of each of the sounds to be uttered by the other character objects based on the value calculated by the relationship degree calculating unit.
With this arrangement, in a case where the sound to be uttered by any spectator character object and a character object other than the player character object overlap, for example, the game device sets the volume of the sound to be uttered by the character object such that the closer a rival relationship with the player character object is, the higher the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game. For example, the data that can be used as a numeric parameter indicating performance include the number of times of match-up, a score, a winning percentage, a ranking, a difference between obtained scores and lost scores, and data quantifying the level of skill of each character object. Further, for example, in a case where the character object is a person or an animal, physical attributes such as height, weight, and age may also be used.

A game device according to another aspect of the present invention comprises a storage unit, a sound output unit, and a relationship degree calculating unit.

The storage unit stores for each of a plurality of character objects at least two numeric parameters indicating the performance of the character object, and at least two numeric parameters indicating the performance at match-ups with each of the other character objects.

The sound output unit mixes the respective sounds to be uttered by the character objects, and outputs the mixed sound.

The relationship degree calculating unit, in a case where the sounds to be uttered by any ones of the plurality of character objects overlap, calculates a degree of an angle formed by a vector composed of the numeric parameters, arranged in a predetermined order, of each of the character objects uttering the sound, the numeric parameters being stored in the storage unit, and a vector composed of the numeric parameters, arranged in the predetermined order, of each of the player character object, the numeric parameter being stored in the storage unit, as a value representing a relationship between each of the character objects uttering the sounds and the player character obj ect.

Further, the sound output unit sets the volume of the sound to be uttered by each of the character objects such that the larger the degree of the angle calculated by the relationship degree calculating unit is, the lower the volume of the sound is.

With this arrangement, in a case where the sounds to be uttered by any spectator character object and a character object other than the player character object overlap, for example, the game device sets the volume of the sound to be uttered by the character object such that the closer a rival relationship with the player character object is, the lower the volume of the sound is. As a result, the game device creates an appropriate presentation in accordance with the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

For example, the data that can be used as a numeric parameter indicating performance include number of times of match-up, the score, the winning percentage, the ranking, the difference between obtained scores and lost scores, and data quantifying the level of skill of each character object. Further, for example, in a case where the character object is a person or an animal, physical attributes such as height, weight, and age may also be used.

A game device according to another aspect of the present invention comprises a storage unit, a sound output unit, and a relationship degree calculating unit.

The storage unit stores for each of a plurality of character objects at least two types of numeric parameters among the total number of times of match-up, the total score, the winning percentage, and the difference between obtained scores and lost scores of the character object, and at least two numeric parameters among the number of times of match-up, the score, the winning percentage, and the difference between obtained scores and lost scores at the match-ups with each of the other character objects.

The sound output unit mixes the respective sounds to be uttered by the character objects, and outputs the mixed sound.

The relationship degree calculating unit, in a case where the sounds to be uttered by any ones of the plurality of character objects overlap, calculates magnitude of a difference between a vector composed of the numeric parameters arranged in a predetermined order of each of the character objects uttering the sound, the numeric parameters being stored in the storage unit, and a vector composed of the numeric parameters, arranged in the predetermined order, of the player character object, the numeric parameters being stored in the storage unit, as the values representing a relationship between each of the character objects uttering the sounds and the player character obj ect.

Further, the sound output unit sets the mixing ratios of the sounds to be uttered by the character objects such that the larger the magnitude of the difference calculated by the relationship degree calculating unit is, the smaller the mixing ratio of the sound is.

With this arrangement, in a case where the sounds to be uttered by any spectator character object and a character object other than the player character object overlap, for example, the game device sets the volume of the sound to be uttered by the character object such that the closer a rival relationship with the player character object is, the higher the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A game device according to another aspect of the present invention comprises a storage unit, a sound output unit, and a relationship degree calculating unit.

The storage unit stores for each of a plurality of character objects at least two types of numeric parameters among the total number of times of match-up, a total score, a winning percentage, and the difference between obtained scores and lost scores of the character object, and at least two types of numeric parameters among the number of times of match-up, the score, the winning percentage, and the difference between obtained scores and lost scores at the match-ups with each of the other character objects.

The sound output unit mixes the respective sounds to be uttered by the character objects, and outputs the mixed sound.

The relationship degree calculating unit, in a case where any of the character objects utters sounds, calculates a degree of an angle formed by a vector composed of the numeric parameters, arranged in a predetermined order, of each of the character objects uttering the sound, the numeric parameters being stored in the storage unit, and a vector composed of the numeric parameters, arranged in the predetermined order, of the player character object, the numeric parameters being stored in the storage unit, as a value representing a relationship between each of the character objects uttering the sounds and the player character object.

Further, the sound output unit sets the volume of the sound to be uttered by each of the character objects such that the larger the degree of the angle calculated by the relationship degree calculating unit is, the lower the volume of the sound is.

With this arrangement, in a case where any spectator character object and a character object other than the player character object utter sounds, for example, the game device sets the volume of the sound to be uttered by the character object such that the closer a rival relationship with the player character object is, the higher the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A game device according to another aspect of the present invention comprises a storage unit, a sound output unit, and a relationship degree calculating unit.

The storage unit stores for each of a plurality of character objects at least two types of numeric parameters among the total number of times of match-up, the total score, the winning percentage, and the difference between obtained scores and lost scores of the character object, and at least two types of numeric parameters among the number of times of match-up, the score, the winning percentage, and the difference between obtained scores and lost scores at the match-ups with each of the other character objects.

The sound output unit mixes the respective sounds to be uttered by the character objects, and outputs the mixed sound.

The relationship degree calculating unit, in a case where any of the character objects utters sounds, calculates magnitude of a difference between a vector composed of the numeric parameters, arranged in a predetermined order, of each of the character objects uttering the sound, the numeric parameters being stored in the storage unit, and a vector composed of the numeric parameters, arranged in the predetermined order, of the player character object, the numeric parameters being stored in the storage unit, as the values representing a relationship between each of the character objects uttering the sounds and the player character object.

Further, the sound output unit sets the mixing ratios of the sounds to be uttered by the character objects such that the larger the magnitude of the difference calculated by the relationship degree calculating unit is, the smaller the mixing ratio of the sound is.

With this arrangement, in a case where any spectator character object and a character object other than the player character object utter sounds, for example, the game device sets the volume of the sound to be uttered by the character object such that the closer a rival relationship with the player character object is, the lower the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A game processing method according to another aspect of the present invention is executed on a game device including a storage unit, and comprises a sound output step and a relationship degree calculating step.

The storage unit stores parameters respectively assigned to, among a plurality of character objects, a player character object associated with a player and the other character objects among the plurality of the character objects.

The sound output step mixes the respective sounds to be uttered by the other character objects, and outputs the mixed sound.

The relationship degree calculating step, in a case where the sounds to be uttered by any ones of a plurality of the other character objects overlap, calculates a value representing a relationship between each of character objects uttering the sounds and the player character object based on a parameter stored in the storage unit.

The sound output step acquires the mixing ratio of the sound to be uttered by the other character objects based on the respective values calculated by the relationship degree calculating step.

With this arrangement, in a case where the sounds to be uttered by any spectator character object and a character object other than the player character object overlap, for example, the game device employing this game processing method sets the volume of the sound to be uttered by the character object such that the closer a rival relationship with the player character object is, the higher the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A game processing method according to another aspect of the present invention is executed on a game device including a storage unit, and comprises a sound output step and a relationship degree calculating step.

The storage unit stores for each of a plurality of character objects at least two types of numeric parameters among the total number of times of match-up, the total score, the winning percentage, and the difference between obtained scores and lost scores of the character object, and at least two types of numeric parameters among the number of times of match-up, the score, the winning percentage, and the difference between obtained scores and lost scores at the match-ups with each of the other character objects.

The sound output step mixes the respective sounds to be uttered by the character objects, and outputs the mixed sound.

The relationship degree calculating step, in a case where the sounds to be uttered by any ones of the plurality of character objects overlap, calculates a degree of an angle formed by a vector composed of the numeric parameters, arranged in a predetermined order, of each of the character objects uttering the sound stored in the storage unit and a vector composed of the numeric parameters, arranged in the predetermined order, of the player character object, the numeric parameters being stored in the storage unit, as a value representing a relationship between each of the character objects uttering the sounds and the player character object.

Further, the sound output step sets the volume of the sound to be uttered by each of the character objects such that the larger the degree of the angle calculated by the relationship degree calculating step is, the lower the volume of the sound is.

With this arrangement, in a case where the sounds to be uttered by any spectator character object and a character object other than the player character object overlap, for example, the game device employing this game processing method sets the volume of the sound to be uttered by the character object such that the closer a rival relationship with the player character object is, the larger the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A game processing method according to another aspect of the present invention is executed on a game device including a storage unit, and comprises a sound output step and a relationship degree calculating step.

The storage unit stores for each of a plurality of character objects at least two numeric parameters indicating the performance of the character object, and at least two numeric parameters indicating the performance at the match-ups with each of the other character objects.

The sound output step mixes the respective sounds to be uttered by the character objects, and outputs the mixed sound.

The relationship degree calculating step, in a case where the sounds to be uttered by any ones of the plurality of character objects overlap, calculates magnitude of a difference between a vector composed of the numeric parameters, arranged in a predetermined order, of each of the character objects uttering the sound, the numeric parameter being stored in the storage unit, and a vector composed of the numeric parameters, arranged in the predetermined order, of the player character object, the numeric parameters being stored in the storage unit, as the values representing a relationship between each of the character objects uttering the sounds and the player character obj ect.

Further, the sound output step sets the mixing ratios of the sounds of the character objects such that the larger the magnitude of the difference calculated by the relationship degree calculating step is, the smaller the mixing ratio of the sound is.

With this arrangement, in a case where the sounds to be uttered by any spectator character object and a character object other than the player character object overlap, for example, the game device employing this game processing method sets the volume of the sound to be uttered by the character object such that the closer a rival relationship with the player character object is, the lower the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A game processing method according to another aspect of the present invention is executed on a game device including a storage unit, and comprises a sound output step and a relationship degree calculating step.

The storage unit stores for each of a plurality of character objects at least two numeric parameters indicating the performance of the character object, and at least two numeric parameters indicating the performance at the match-ups with each of the other character objects.

The sound output step mixes the respective sounds to be uttered by the character objects, and outputs the mixed sound. The relationship degree calculating step, in a case where any of the character objects utters sounds, calculates a degree of an angle formed by a vector composed of the numeric parameters of each of the character objects uttering the sound, the numeric parameters stored in the storage unit, and a vector composed of the numeric parameters, arranged in a predetermined order, of the player character object, the numeric parameters being stored in the storage unit, as a value representing a relationship between each of the character objects uttering the sounds and the player character object. Further, the sound output step sets the volume of the sound to be uttered by each of the character objects such that the larger the degree of the angle calculated by the relationship degree calculating step is, the lower the volume of the sound is.

With this arrangement, in a case where any spectator character object and a character object other than the player character object utter sounds, for example, the game device employing this game processing method sets the volume of the sound to be uttered by the character object such that the closer a rival relationship with the player character object is, the higher the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A game processing method according to another aspect of the present invention is executed on a game device including a storage unit, and comprises a sound output step and a relationship degree calculating step.

The storage unit stores for each of a plurality of character objects at least two types of numeric parameters indicating the performance of the character object, and at least two types of numeric parameters indicating the performance at the match-ups with each of the other character objects.

The sound output step mixes the respective sounds to be uttered by the character objects, and outputs the mixed sound. The relationship degree calculating step, in a case where any of the character objects utters sounds, calculates magnitude of a difference between a vector composed of the numeric parameters, arranged in a predetermined order, of each of the character objects uttering the sound, the numeric parameter being stored in the storage unit, and a vector composed of the numeric parameters, arranged in the predetermined order, of the player character object, the numeric parameters being stored in the storage unit, as a value representing a relationship between each of the character objects uttering the sounds and the player character object.

Further, the sound output step sets the mixing ratios of the sounds of the character objects such that the larger the magnitude of the difference calculated by the relationship degree calculating step is, the smaller the mixing ratio is.

With this arrangement, in a case where any spectator character object and a character object other than the player character object utter sounds, for example, the game device employing this game processing method sets the volume of the sound to be uttered by the character object such that the closer a rival relationship with the player character object is, the higher the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing interest of the game.

An information recording medium according to another aspect of the present invention stores a program for controlling a computer to function as a storage unit, a sound output unit, and a relationship degree calculating unit.

The storage unit stores parameters respectively assigned to, among a plurality of character objects, a player character object associated with a player and other character objects.

The sound output unit mixes the respective sounds to be uttered by the other character objects, and outputs the mixed sound.

The relationship degree calculating unit, in a case where the sounds to be uttered by any ones of a plurality of the other character objects overlap, calculates a value representing a relationship between each of character objects uttering the sounds and the player character object based on a parameter stored in the storage unit.

The sound output unit acquires the mixing ratio of each of the sounds to be uttered by the other character objects based on the value calculated by the relationship degree calculating unit.

With this arrangement, in a case where the sounds to be uttered by any spectator character object and a character object other than the player character object overlap, for example, the information recording medium controls the computer to function as a game device that sets the volume of sound to be uttered by the character object such that the closer a rival relationship with the player character object is, the higher the volume of the sound is. As a result, the computer creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

An information recording medium according to another aspect of the present invention stores a program for controlling a computer to function as a storage unit, a sound output unit, and a relationship degree calculating unit.

The storage unit stores for each of a plurality of character objects at least two types of numeric parameters among the total number of times of match-up the total score, the winning percentage, and the difference between obtained scores and lost scores of the character object, and at least two types of numeric parameters among the number of times of match-up, the score, the winning percentage, and the difference between obtained scores and lost scores at the match-ups with each of the other character objects.

The sound output unit mixes the respective sounds to be uttered by the character objects, and outputs the mixed sound.

The relationship degree calculating unit, in a case where the sounds to be uttered by any ones of the plurality of character objects overlap, calculates a degree of an angle formed by a vector composed of the numeric parameters, arranged in a predetermined order, of each of the character objects uttering the sound, the numeric parameters being stored in the storage unit, and a vector composed of the numeric parameters, arranged in the predetermined order, of the player character object, the numeric parameter being stored in the storage unit, as a value representing a relationship between each of the character objects uttering the sounds and the player character object.

Further, the sound output unit sets the volume of the respective sounds to be uttered by the character objects such that the larger the degree of the angle calculated by the relationship degree calculating unit is, the lower the volume of the sound is.

With this arrangement, in a case where the sounds to be uttered by any spectator character object and a character object other than the player character object overlap, for example, the information recording medium controls the computer to function as a game device that sets the volume of the sound to be uttered by each of the character object such that the closer a rival relationship with the player character object is, the higher the volume of the sound is. As a result, the computer creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

An information recording medium according to another aspect of the present invention stores a program for controlling a computer to function as a storage unit, a sound output unit, and a relationship degree calculating unit.

The storage unit stores for each of a plurality of character objects at least two types of numeric parameters indicating the performance of the character object, and at least two types of numeric parameters indicating the performance at match-ups with each of the other character objects.

The sound output unit mixes the respective sounds to be uttered by the character objects, and outputs the mixed sound.

The relationship degree calculating unit, in a case where the sounds to be uttered by any ones of the plurality of character objects overlap, calculates magnitude of a difference between a vector which is composed of the numeric parameters, arranged in a predetermined order, of each of the character objects uttering the sound stored in the storage unit and a vector composed of the numeric parameters, arranged in the predetermined order, of the player character object, the numeric parameters being stored in the storage unit, as the values representing a relationship between each of the character objects uttering the sounds and the player character object.

Further, the sound output unit sets the mixing ratios of the sounds to be uttered by the character objects such that the larger the magnitude of the difference calculated by the relationship degree calculating unit is, the smaller the mixing ratio of the sound is.

With this arrangement, in a case where the sounds to be uttered by any spectator character object and a character object other than the player character object overlap, for example, the information recording medium controls the computer to function as a game device that sets the volume of the sound to be uttered by the character object such that the closer a rival relationship with the player character object is, the higher the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

An information recording medium according to another aspect of the present invention stores a program for controlling a computer to function as a storage unit, a sound output unit, and a relationship degree calculating unit.

The storage unit stores for each of a plurality of character objects at least two types of numeric parameters indicating the performance of the character object, and at least two types of numeric parameters indicating the performance at match-ups with each of the other character objects.

The sound output unit mixes the respective sounds to be uttered by the character objects, and outputs the mixed sound.

The relationship degree calculating unit, in a case where any of the character objects utters sounds, calculates a degree of an angle formed by a vector which is composed of the numeric parameters, arranged in a predetermined order, of each of the character objects uttering the sound, the numeric parameter being stored in the storage unit and a vector composed of the numeric parameters, arranged in the predetermined order, of the player character object stored in the storage unit, as a value representing a relationship between each of the character objects uttering the sounds and the player character obj ect.

Then, the sound output unit sets the volume of each of the sounds to be uttered by the character objects such that the larger the degree of the angle calculated by the relationship degree calculating unit is, the lower the volume of the sound is.

With this arrangement, in a case where any spectator character object and a character object other than the player character object utter sounds, for example, the information recording medium controls the computer to function as a game device that sets the volume of sound to be uttered by the character object such that the closer a rival relationship with the player character object is, the larger the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

An information recording medium according to another aspect of the present invention stores a program for controlling a computer to function as a storage unit, a sound output unit, and a relationship degree calculating unit.

The storage unit stores for each of a plurality of character objects at least two types of numeric parameters indicating the performance of the character object, and at least two types of numeric parameters indicating the performance at match-ups with each ofthe other character objects.

The sound output unit mixes the respective sounds to be uttered by the character objects, and outputs the mixed sound.

The relationship degree calculating unit, in a case where any of the character objects utters sounds, calculates magnitude of a difference between a vector composed of the numeric parameters, arranged in a predetermined order, of each of the character objects uttering the sound stored in the storage unit and a vector composed of the numeric parameters, arranged in the predetermined order, of the player character object stored in the storage unit, as a value representing a relationship between each of the character objects uttering the sounds and the player character object.

Then, the sound output unit sets the mixing ratio of each of the sounds to be uttered by each of the character objects such that the larger the size of the difference calculated by the relationship degree calculating unit is, the smaller the mixing ratio is.

With this arrangement, in a case where any spectator character object and a character object other than the player character object utter sounds, for example, the information recording medium controls the computer to function as a game device that sets the sound to be uttered by the character object such that the closer a rival relationship with the player character object is, the higher the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A program according to another aspect of the present invention is constituted so as to cause a computer to function as a storage unit, a sound output unit, and a relationship degree calculating unit.

The storage unit stores parameters respectively assigned to, among a plurality of character objects, a player character object associated with a player and other character objects.

The sound output unit mixes the respective sounds to be uttered by the other character objects, and outputs the mixed sound.

The relationship degree calculating unit, in a case where the sounds to be uttered by any ones of a plurality of the other character objects overlap, calculates a value representing a relationship between each of the character objects uttering the sounds and the player character object based on a parameter stored in the storage unit.

The sound output unit acquires the mixing ratio of each of the sounds to be uttered by the other character objects based on the value calculated by the relationship degree calculating unit.

With this arrangement, in a case where the sounds to be uttered by any spectator character object and a character object other than the player character object overlap, for example, the program is constituted so as to cause the computer to function as a game device that sets the volume of the sound to be uttered by the character object such that the closer a rival relationship with the player character object is, the higher the volume of the sound is. As a result, the computer creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A program according to another aspect of the present invention is constituted so as to cause a computer to function as a storage unit, a sound output unit, and a relationship degree calculating unit.

The storage unit stores for each of a plurality of character objects at least two types of numeric parameters among the total number of times of match-up, the total score, the winning percentage, and the difference between obtained scores and lost scores of the character object, and at least two types of numeric parameters among the number of times of match-up, the score, the winning percentage, and the difference between obtained scores and lost scores at the match-ups with each of the other character objects.

The sound output unit mixes the respective sounds to be uttered by the character objects, and outputs the mixed sound.

The relationship degree calculating unit, in a case where the sounds to be uttered by any ones of the plurality of character objects overlap, calculates a degree of an angle formed by a vector composed of the numeric parameters, arranged in a predetermined order, of each of the character objects uttering the sound, the numeric parameters being stored in the storage unit, and a vector composed of the numeric parameters arranged in the predetermined order, of the player character object, the numeric parameters being stored in the storage unit, as a value representing a relationship between each of the character objects uttering the sounds and the player character object.

Then, the sound output unit sets the volume of the sound to be uttered by each of the character objects such that the larger the degree of the angle calculated by the relationship degree calculating unit is, the lower the volume of the sound is.

With this arrangement, in a case where the sounds to be uttered by any spectator character object and a character object other than the player character object overlap, for example, the program causes the computer to function as a game device that sets the volume of the sound to be uttered by the character object such that the closer a rival relationship with the player character object is, the higher the volume of the sound is. As a result, the computer creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A program according to another aspect of the present invention is constituted so as to cause a computer to function as a storage unit, a sound output unit, and a relationship degree calculating unit.

The storage unit stores for each of a plurality of character objects at least two types of numeric parameters indicating the performance of the character object, and at least two types of numeric parameters indicating the performance at match-ups with each of the other character objects.

The sound output unit mixes the respective sounds to be uttered by the character objects, and outputs the mixed sound.

The relationship degree calculating unit, in a case where the sounds to be uttered by any ones of the plurality of character objects overlap, calculates magnitude of a difference between a vector composed of the numeric parameters, arranged in a predetermined order, of each of the character objects uttering the sound, the numeric parameters being stored in the storage unit, and a vector composed of the numeric parameters, arranged in the predetermined order, of the player character object, the numeric parameters being stored in the storage unit, as a value representing a relationship between each of the character objects uttering the sounds and the player character object.

Then, the sound output unit sets the mixing ratio of each of the sounds to be uttered by the character objects such that the larger the magnitude of the difference calculated by the relationship degree calculating unit is, the lower the volume of the sound is.

With this arrangement, in a case where the sounds to be uttered by any spectator character object and a character object other than the player character object overlap, for example, the program is constituted so as to cause the computer to function as a game device that sets the volume of the sound to be uttered by the character object, such that the closer a rival relationship with the player character object is, the lower the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A program according to another aspect of the present invention is constituted so as to cause a computer to function as a storage unit, a sound output unit, and a relationship degree calculating unit.

The storage unit stores for each of a plurality of character objects at least two types of numeric parameters indicating the performance of the character object, and at least two types of numeric parameters indicating the performance at match-ups with each of the other character objects.

The sound output unit mixes the respective sounds to be uttered by the character objects, and outputs the mixed sound.

The relationship degree calculating unit, in a case where any of the character objects utters sounds, calculates a degree of an angle formed by a vector composed of the numeric parameters, arranged in a predetermined order, of each of the character objects uttering the sound, the numeric parameters being stored in the storage unit, and a vector composed of the numeric parameters, arranged in the predetermined order, of the player character object stored in the storage unit, as the values representing a relationship between each of the character objects uttering the sounds and the player character object.

Then, the sound output unit sets the volume of each of the sounds to be uttered by the character objects such that the larger the degree of the angle calculated by the relationship degree calculating unit is, the smaller the volume of the sound is.

With this arrangement, in a case where any spectator character object and a character object other than the player character object utter sounds, for example, the program causes the computer to function as a game device that sets the volume of the sound to be uttered by the character object such that the closer a rival relationship with the player character object is, the larger the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

A program according to another aspect of the present invention is constituted so as to cause a computer to function as a storage unit, a sound output unit, and a relationship degree calculating unit.

The storage unit stores for each of a plurality of character objects at least two types of numeric parameters indicating the performance of the character object, and at least two types of numeric parameters indicating the performance at match-ups with each of the other character objects.

The sound output unit mixes the respective sounds to be uttered by the character objects, and outputs the mixed sound.

The relationship degree calculating unit, in a case where any of the character objects utters sounds, calculates magnitude of a difference formed by a vector composed of the numeric parameters, arranged in a predetermined order, of each of the character objects uttering the sound stored in the storage unit and a vector composed of the numeric parameters, arranged in the predetermined order, of the player character object, the parameter being stored in the storage unit, as the values expressing a relationship between each of the character objects uttering the sounds and the player character object.

Then, the sound output unit sets the mixing ratios of the sounds to be uttered by the character objects such that the larger the magnitude of the difference calculated by the relationship degree calculating unit is, the smaller the mixing ratio of the sound is.

With this arrangement, in a case where any spectator character object and a character object other than the player character object utter sounds, for example, the program is constituted so as to cause the computer to function as a game device that sets the volume of sound to be uttered by the character object such that the closer a rival relationship with the player character object is, the larger the volume of the sound is. As a result, the game device creates an appropriate presentation according to the opponent relationship between the character objects, making it possible to change the presentation so as to increase the realistic sensation and cohesiveness of the game. Further, the player can play the game while being aware of the opponent relationships between him/herself and the players participating in or watching the game, thereby increasing the interest of the game.

The program of the present invention can be recorded on a computer-readable information recording medium, such as a compact disk, a flexible disk, a hard disk, a magneto-optical disk, a digital video disk, a magnetic tape, or a semiconductor memory.

The program can be distributed and sold, independently of a computer which executes the program, over a computer communication network. The information recording medium can be distributed and sold independently of the computer.

Effect of the Invention

According to the present invention, it is possible to provide a game device, game processing method, information recording medium, and program suitable for changing sound to be uttered by a character in accordance with an opponent relationship and producing the changed sound in a game that takes place in virtual space.

Brief Description of Drawings

FIG. 1 is a diagram illustrating a schematic configuration of a typical information processing device on which a game device of the present invention will be realized.
FIG. 2 is a drawing for explaining the configuration of the game device.
FIG. 3 is a typical example of a state in which the game is played using the game device.
FIG. 4 is an example of a game screen outputted to the monitor.
FIG. 5A is an example of data stored in the storage unit.
FIG. 5B is an example of data stored in the storage unit.
FIG. 6 is a flowchart for explaining the sound output process.

FIG. 7A is an example of a game screen outputted to the monitor.
FIG. 7B is an example of a game screen outputted to the monitor.
FIG. 8A is an example of data stored in the storage unit.
FIG. 8B is an example of data stored in the storage unit.
FIG. 9 is an example of a game screen outputted to the monitor in the exemplary modification of embodiment 1.
FIG. 10 is a drawing for explaining a vector expressing the difference in characteristics between character objects in embodiment 2.

Description of Reference Numerals

| | |
|---|---|
| 100 | information processing device |
| 101 | CPU |
| 102 | ROM |
| 103 | RAM |
| 104 | interface |
| 105 | controller |
| 106 | external memory |
| 107 | image processor |
| 108 | DVD-ROM drive |
| 109 | NIC |
| 110 | sound processor |
| 200 | game device |
| 201 | storage unit |
| 202 | sound output unit |
| 203 | relationship degree calculating unit |
| 301 | competitor player |
| 302 | spectator player |
| 303 | network |
| 401 | competitor character object |
| 402 | spectator character object |
| 701 | first competitor character object |
| 702 | second competitor character object |
| 703 | first spectator character object |
| 704 | second spectator character object |

Best Mode for Carrying Out the Invention

(Embodiment 1)

An embodiment of the present invention will be described below. While the following describes an embodiment in which the present invention is realized for ease of understanding to an information processing apparatus for games, the embodiment to be described below is given by way of illustration only, and does not limit the scope of the invention. Therefore, persons skilled in the art can employ embodiments in which the individual elements or all the elements are replaced with equivalent ones, and which are also encompassed in the scope of the invention.

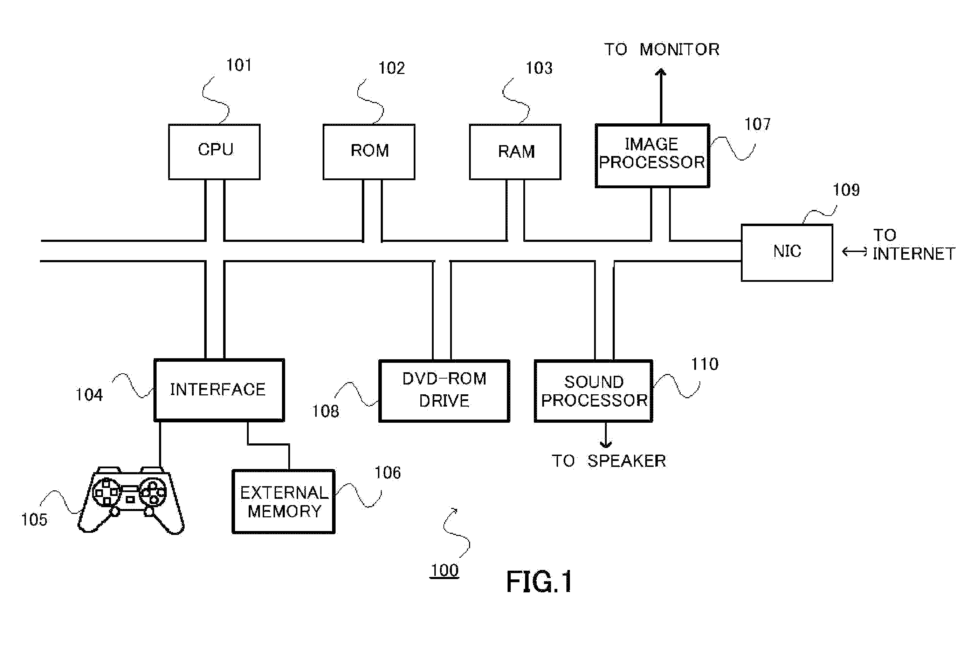

FIG. 1 is an exemplary diagram illustrating the schematic configuration of a typical information processing device 100 that carries out the function of a game device of the present invention by executing a program. A description is given below with reference to this drawing.

An information processing device 100 comprises a CPU (Central Processing Unit) 101, a ROM (Read Only Memory) 102, a RAM (Random Access Memory) 103, an interface 104, a controller 105, an external memory 106, an image processor 107, a DVD-ROM (Digital Versatile Disc-Read Only Memory) drive 108, an NIC (Network Interface Card) 109, and a sound processor 110.

As a DVD-ROM storing a program and data for a game is loaded into the DVD-ROM drive 108 and the information processing device 100 is powered on, the program is executed to realize the game device of the embodiment.

The CPU 101 controls the overall operations of the information processing device 100, and is connected to individual components to exchange a control signal and data therewith. Further, by using an ALU (Arithmetic Logic Unit) (not shown), the CPU 101 can perform arithmetic calculations such as addition, subtraction, multiplication, division, etc.,

logical calculations such as logical addition, logical multiplication, logical negation, etc., bit operations such as bit addition, bit multiplication, bit inversion, bit shift, bit rotation, etc., on a storage area, or a register (not shown) which can be accessed at a high speed. Furthermore, the CPU 101 itself may be designed to be able to rapidly perform saturate operations such as addition, subtraction, multiplication, division, etc., for handling multimedia processes, vector operations such as trigonometric function, etc., or may realize these with a coprocessor.

An IPL (Initial Program Loader) which is executed immediately after power-on is recorded in the ROM 102. As the IPL is executed, the program recorded in the DVD-ROM is read into the RAM 103 and is executed by the CPU 101. Further, the ROM 102 stores a program and various data for an operating system necessary for controlling the overall operation of the information processing device 100.

The RAM 103 is for temporarily storing data and programs, and retains the program and data read out from the DVD-ROM, and other data needed for progressing a game and chat communication. Further, the CPU 101 performs processes such as securing a variable area in the RAM 103, working the ALU directly upon the value stored in the variable to perform operations, or once storing the value stored in the RAM 103 in the register, performing operations on the register, and writing back the operation result to the memory, etc.

The controller 105 connected via the interface 104 receives an operation input which is made when a player executes the game, such as a mah-jongg game or card game.

The external memory 106 detachably connected via the interface 104 rewritably stores data indicating the play status (past performance, etc.) of a mah-jongg game, etc., data indicating the progress status of the game, data of chat communication logs (records) in the case of a network match-up game, etc. As the user makes an instruction input via the controller 105, these data can adequately be recorded in the external memory 106.

The program for realizing the game and the image data and sound data accompanying the game are recorded in the DVD-ROM to be loaded into the DVD-ROM drive 108. Under the control of the CPU 101, the DVD-ROM drive 108 performs a process of reading from the DVD-ROM loaded therein to read out a necessary program and data, and these are temporarily stored in the RAM 103 or the like.

The image processor 107 processes data read out from the DVD-ROM by means of the CPU 101 and an image operation processor (not shown) that the image processor 107 has, and then records the data in a frame memory (not shown) in the image processor 107. The image information recorded in the frame memory is converted to a video signal at a predetermined synchronous timing, which is in turn output to a monitor (not shown) connected to the image processor 107. Image displays of various types are therefore possible.

The image operation processor can enable fast execution of an overlay operation of a two-dimensional image, a transparent operation such as alpha blending, and various kinds of saturate operations.

It is also possible to enable fast execution of an operation of rendering polygon information which is arranged in virtual three-dimensional space and to which various kinds of texture information are added, by a Z buffer scheme to acquire a rendered image with a downward view of a polygon toward a predetermined view point position, arranged in the virtual three-dimensional space, from the predetermined sight line.

Further, the CPU 101 and the image operation processor cooperate to be able to write a string of characters as a two-dimensional image in the frame memory or on each polygon surface in accordance with font information which defines the shapes of characters.

Information such as the mah-jongg game tile images or images of playing cards are prepared on the DVD-ROM so as to enable display of the current tile hand or card hand when such information is loaded in frame memory.

The NIC 109 serves to connect the information processing device 100 to a computer communication network (not shown), such as the Internet or the like. The NIC 109 is pursuant to the 10 BASE-T/100 BASE-T standard which is used for constructing a LAN (Local Area Network) for example, or it is comprised of such an analog modem for connecting to the Internet using a telephone circuit, an ISDN (Integrated Services Digital Network) modem, an ADSL (Asymmetric Digital Subscriber Line) modem, a cable model for connecting to the Internet using a cable television circuit, or the like, and of an interface (not shown) which intervenes between the CPU 101 and any one of such modems.

The sound processor 110 converts sound data read out from the DVD-ROM to an analog sound signal, and outputs the sound signal from a speaker (not shown) connected thereto. Under the control of the CPU 101, the sound processor 109 generates sound effects and music data to be generated during progress of the game, and outputs sounds corresponding thereto from a speaker.

In a case where the sound data recorded on the DVD-ROM is MIDI data, the sound processor 110 refers to the sound source data that the sound processor 110 possesses, and converts the MIDI data to PCM data. Further, in a case where the sound data is compressed sound data of ADPCM (Adaptive Differential Pulse Code Modulation) format or Ogg Vorbis format, etc., the sound processor 110 decompresses the data, converting it to PCM data. The PCM data is D/A (Digital/Analog) converted at a timing corresponding to the sampling frequency of the data and output to the speaker, thereby enabling sound output.

In addition, the information processing device 100 may be configured to achieve the same functions as the ROM 102, the RAM 103, the external memory 106, and the DVD-ROM which is to be loaded into the DVD-ROM drive 108 or the like by using a large-capacity external storage device, such as a hard disk.

Next, the processing performed by the game device 200 of the present embodiment will be described with reference to the drawings. In the following explanation, the scene described is one wherein a plurality of players compete in a baseball game within virtual space and other players such as spectators and the like watch the game, and cheer and jeer within the virtual space. The type of game that the players play, the game scene, the number of players, and other information described below are merely examples; naturally, other embodiments may be employed and are also included in the scope of the present invention. Additionally, the present invention is also applicable to a scene in a case where players are in a free-for-all state in a so-called battle royal format, and the sounds to be uttered by character objects having similar ability or rival relationships, or character objects having a fateful relationship with a long match-up history are emphasized. Such a case will now be described.

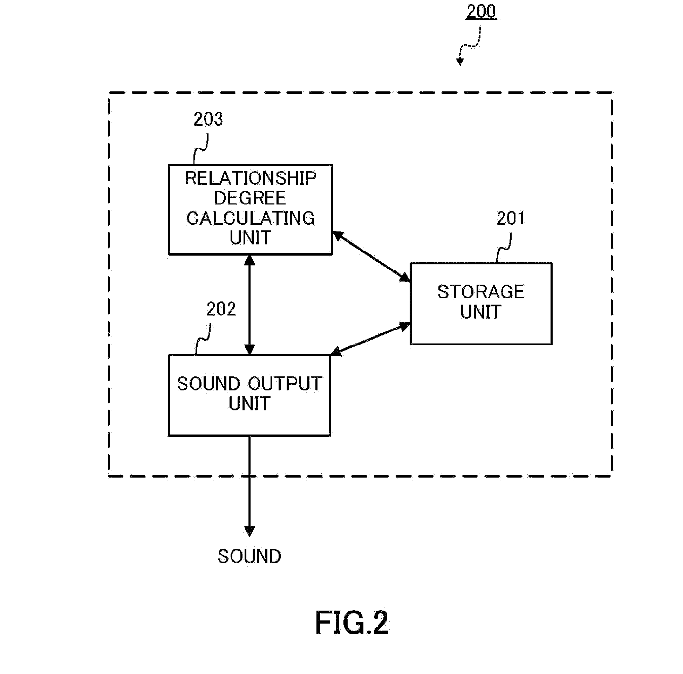

FIG. 2 is a diagram describing the configuration of the game device 200 of the embodiment. The game device 200 comprises a storage unit 201, a relationship degree calculating unit 203, and a sound output unit 202. The details will be described later.

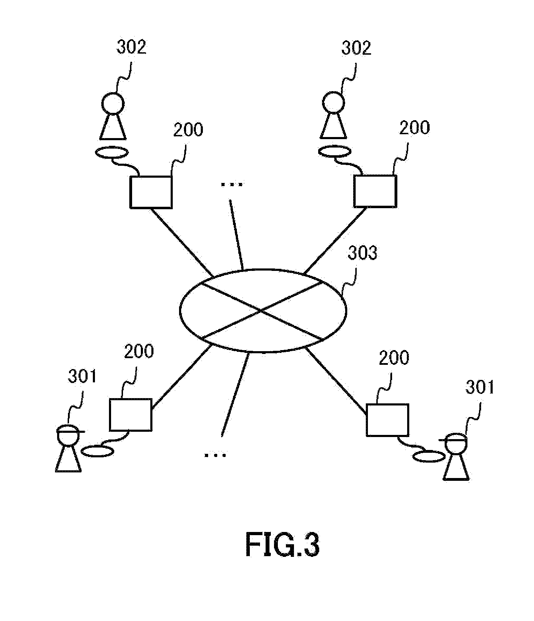

FIG. 3 is a drawing for explaining a typical example of conditions where a game is played within virtual space using the game device 200. The game device 200 is connected to a network 303 via the NIC 109, making it possible for the respective players of the game device 200 to take on each other and play the same game. The players include a competitor player 301 who directly competes in and plays the game, and a spectator player 302 who does not directly compete but watch the course of the game and can cheer and jeer within the virtual space according to the progress of the game. Depending on the content of the game, the number of competitor players 301 may be three or more, or may be one with the player playing against the computer. Any number of spectator players 302 can participate. The network 303 is the Internet, a LAN, or the like.

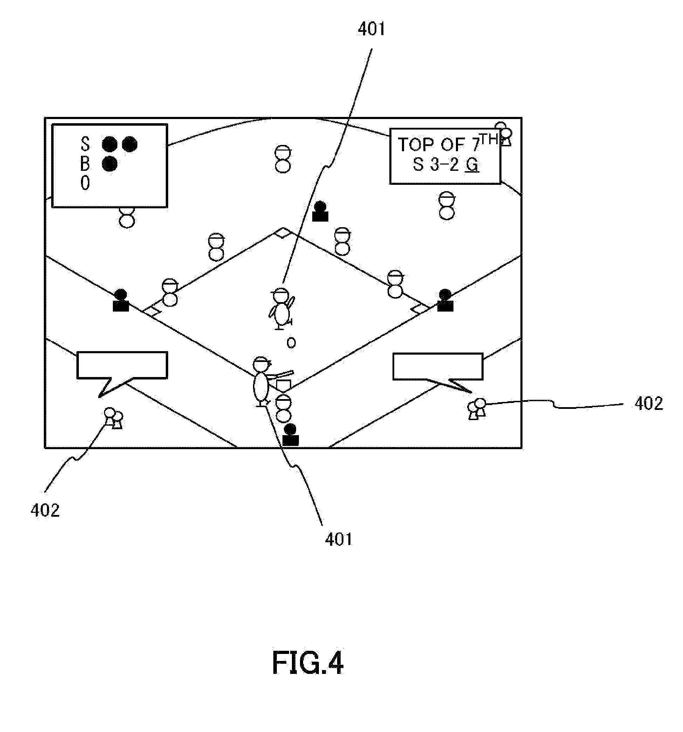

FIG. 4 is an example of a game screen outputted to the monitor connected to the image processor 107. The competitor player 301 operates the controller 105 so as to give instructions to a player character object (for example, a competitor character object 401) and plays the game. The spectator player 302 operates the controller 105 while watching the game screen outputted to the monitor so as to give instructions to another character object (for example, a spectator character object 402) and cheer on or jeer at any of the competitor character objects 401. The cheers and jeers uttered from the spectator character object 402 are outputted as sound from a speaker connected to the sound processor 110, or outputted on the monitor using a dialog display of letters. These cheers and jeers are outputted as sounds from the speakers of the respective game devices 200 used by the competitor player 301 and the spectator player 302, or displayed on the respective monitors. Further, the character objects include another character object such as a character object that makes a play-by-play commentary or commentate on the actual status of the game besides the competitor character object 401 and the spectator character object 402, and sounds to be uttered from these character objects are also outputted. In this manner, the competitor player 301 and the spectator player 302 can play the game with a realistic sensation and sense of cohesiveness of the game.

The storage unit 201 stores the parameters respectively assigned to, among the plurality of character objects of the game, the competitor character object 401 associated with the competitor player 301 and the spectator character object 402 associated with the spectator player 302 among the plurality of character objects of the game. For example, these parameters include the past match-up history between the character objects or players, and attribute information such as the strength of the character object. Typically, these parameters are stored in the external memory 106, such as a memory card connected to the interface 104, but other memory devices may also be used. Furthermore, the CPU 101 and the external memory 106 operate in coordination, functioning as the storage unit 201.

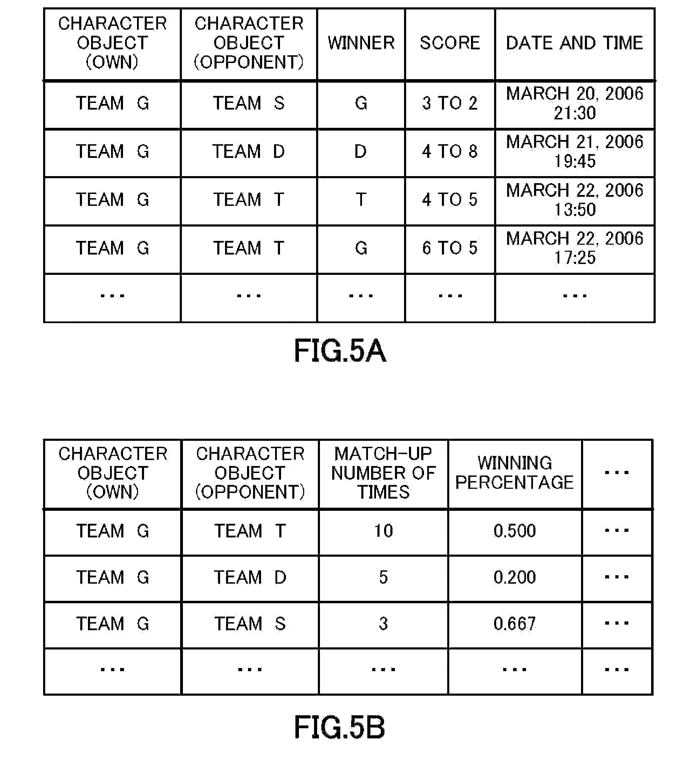

FIG. 5A is an example of data indicating the match-up history of character objects, which is one parameter stored in the storage unit 201. In this figure, the character object of the player, the character objects of the opponents, victory or defeat, scores, and date and time when the game is played are recorded correspondingly. The storage unit 201 can also store data other than the items shown in the figure. For example, as shown in FIG. 5B, the CPU 101 may calculate summary information that includes the number of times of match-up and the winning percentage obtained from this match-up history each time a game is played, and the storage unit 201 may store the calculation results.

The sound output unit 202 mixes the respective sounds to be uttered by the character objects, and outputs the mixed sound. That is, the sound output unit 202 acquires the digital sound data corresponding to the sounds to be uttered by the competitor character object 401 and one of the spectator character objects 402, converts the data to an analog sound signal via a D/A converter and, if there is sound to be uttered by another spectator character object 402, similarly converts the digital sound data to a corresponding analog sound signal. Furthermore, the sound output unit 202 reproduces the sound signal obtained upon mixing these data and outputs the sound signal from the speaker. Here, the mixing ratio of each of the sounds is calculated using a value obtained by the relationship degree calculating unit 203, which will be described in detail later. Further, the sound output unit 202 also may mix the sounds to be uttered by other character objects in addition to the competitor character object 401 and the spectator character object 402, and output the mixed sound.

Furthermore, the CPU 101 and the sound processor 110 operate in coordination so as to function as the sound output unit 202.

The sound data corresponding to the sounds to be uttered by the character objects are not limited to digital sound data, but rather data of any format can be used. The sound data are not limited to the sound outputted from a speaker, but may be character strings and the like displayed in an image on the monitor. The sound output unit 202 may also output sound to be sound-processed by the sound processor 110, and the CPU 101 may operate in coordination with the image processor 107 so as to output images such as static images and dynamic images to be image-processed by the image processor 107.

The relationship degree calculating unit 203, in a case where the sounds of cheers and jeers and the like made by the spectator character objects 402 overlap, calculates the respective values indicating the relationship between each of the spectator character objects 402 that utter these sounds and the competitor character object 401 using a parameter stored in the storage unit 201, and inputs the obtained calculation results to the sound output unit 202. Here, a case where the sounds overlap is not limited to a case where the timings at which sounds are uttered completely match (a simultaneous case), but rather includes cases where the sounds when reproduced are uttered wholly or partially so close in time that they are substantially heard in an overlapping state.

Specifically, this relationship is a rival relationship indicating to what extent the ability level, performance, etc., are evenly matched between the character objects, an analogous relationship of the characteristics of the character objects, or an acquaintance relationship of the character objects based on game settings, etc. The value indicating this relationship is a value (hereinafter "rival coefficient") that expresses the degree of the rival relationship, analogous relationship, acquaintance relationship, etc. Since the degree of the rival relationship between the character objects is large (the character objects are worthy opponents) as the value of the rival coefficient is large, the game is expected to become heated due to increased tension if these character objects play against each other.

That is, the relationship degree calculating unit 203 calculates the rival coefficient between the competitor character object 401 and the spectator character object 402 based on a predetermined parameter stored in the storage unit 201 when the spectator character object 402 utters sound such as cheers or jeers based on an instruction from the spectator player 302.

This parameter is, for example, the performance of the respective character objects, such as the total number of times of match-up, the total score, the winning percentage, the ranking, etc., of the respective character objects. This parameter is, for example, the performance of each of the opponents of the respective character objects, such as the number of times of match-up, a difference of scores, a difference of winning percentage, a difference of ranking, etc., between the character objects. Typically, performance is expressed using a numeric value.

Then, the sound output unit 202 determines the mixing ratio of each of the sounds such as the cheers and jeers uttered by the spectator character objects 402 based on the rival coefficients calculated by the relationship degree calculating unit 203, mixes the sounds at this mixing ratio, and outputs the mixed sound. For example, in a case where sounds overlap such as the sounds of cheers and jeers simultaneously uttered by a plurality of the spectator character objects 402, the relationship degree calculating unit 203 calculates the rival coefficient of each of the spectator character objects 402 that uttered sound, and sets the mixing ratio of the sound to be uttered by that spectator character object 402 such that the larger the value of the rival coefficient is, the larger the mixing ration of the sound uttered by the spectator object is.

With this arrangement, even if the sounds such as the cheers and jeers to be uttered by the plurality of spectator character objects 402 overlap, each of the sounds is not outputted in the same way, but rather outputted so that the sounds of those spectator character objects 402 having a high rival coefficient are emphasized and outputted accordingly. For example, the sound output unit 202 executes control so that the volume of the sound outputted from the speaker is relatively loud as the rival coefficient grows. Or, the sound output unit 202 executes control so that the letters of the lines displayed on the monitor are relatively large as the rival coefficient is big.

Furthermore, the CPU 101 reads out and runs a predetermined program stored in the DVD-ROM, thereby functioning as the relationship degree calculating unit 203.

One method of calculating the rival coefficient is to acquire the sum of a basic coefficient and an event coefficient, as shown in Equation 1.

Equation 1

$$\text{Rival coefficient} = \text{Basic coefficient} + \text{Event coefficient}$$

Here, the basic coefficient is calculated based on a numeric parameter that can be expressed in a scalar amount, such as the number of times of match-up, the number of times of game, the score, the winning percentage, or the ranking. The smaller the difference between the numeric parameters of the competitor character object 401 and the spectator character object 402 is, the larger the basic parameter is. That is, the closer the scores, the winning percentage, or the ranking, etc. are, the more imminent the enemy is regarded as (the opponent is a worthy opponent) and the larger the value of the basic coefficient is. For example, the value of the basic coefficient is large as the difference in points at the last match-up is small (as the game is a close match). Furthermore, the basic coefficient may be calculated using parameters other than numeric parameters, such as past match-up history or past event history.

The event coefficient is set as a predetermined value per game event that arises during the game. The event coefficient is a coefficient to be accumulated per character object each time an event arises. For example, each time a foul play, rough play, good play, or a play that has a major effect on the game is made, a value associated in advance with these plays is added to the event coefficient corresponding to the character object that made that play (or on whom the play was made).

For example, the relationship degree calculating unit 203 adds a predetermined value corresponding to the event content to the event coefficient by executing a program that stores in advance data indicating the correspondence between events and the predetermined values to be added. Or, the relationship degree calculating unit 203 may read out a predetermined value corresponding to the event from a table or database indicating the correspondence between event types and the predetermined values to be added (or subtracted) in response thereto, so as to calculate the event coefficient.

The event coefficient may be decreased with the passing of time within the game or with the passing of time of the real world. Then, the effect on the relationship between character objects may be made to increase (that is, the contribution to the rival coefficient may be made large) in accordance with the recency of the events that have occurred. For example, the relationship degree calculating unit 203 monotonically decreases the event coefficient with the passage of time within the game and the passage of time of the real world. With this arrangement, the opponent relationship between the competitor character object 401 and the spectator character object 402 estimated as most applicable to current conditions can be reflected in the presentation of the game.

Further, the relationship degree calculating unit 203 may calculate the rival coefficient based on a numeric parameter of a predetermined time period (for example, the past week, the past month, etc.) from the current time of the real world. With this arrangement, the rival coefficient estimated as most applicable to current conditions can be obtained.

Furthermore, not limited to addition or subtraction, the relationship degree calculating unit 203 may calculate the rival coefficient using any operation.

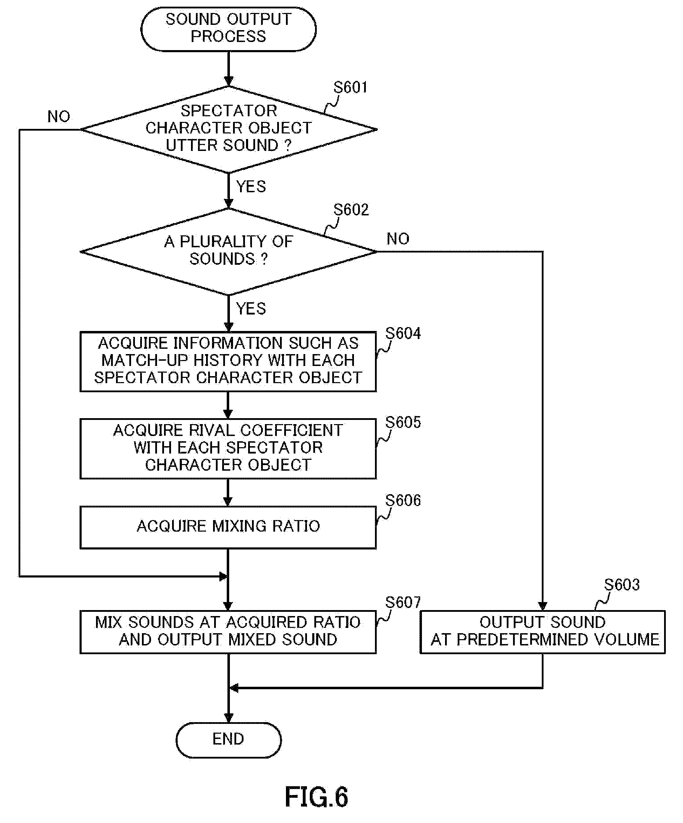

Next, the sound output processing executed by the storage unit 201, the sound output unit 202, and the relationship degree calculating unit 203 of the embodiment will be described with reference to the flowchart of FIG. 6. In the following explanation, the scene described is one wherein two competitor players 301 compete in a baseball game within virtual space and a plurality of spectator players 302 observe the game and cheer and jeer within the virtual space. Here, the sound to be uttered by the character object is outputted at a big mixing ratio as the match-up number of times with the competitor character object 401 is much. This scene will now be described below.

First, the sound output unit 202 determines whether or not sound is to be uttered by the spectator character object 402 (step S601).

In a case where sound is not to be uttered by the spectator character object 402 (step S601; No), the sound output unit 202 terminates the sound output process. Such processing corresponds to a case where, for example, the competitor character objects 401 corresponding to the two competitor players 301 are playing the game, one or more of the spectator players 302 are observing the game, and none of the character objects utters sound, or to a case where there is no spectator character object 402 in the game.

In a case where sound is to be uttered by the spectator character object 402 (step S601; Yes), the sound output unit 202 determines whether or not there is a plurality of sounds to be uttered (step S602). That is, the sound output unit 202 determines whether or not there is sound to be uttered by one of the spectator character objects 402 which overlap with sound to be uttered by another spectator character object 402.

In a case where it is not that a plurality of the sound are uttered (step S602; No), the sound output unit 202 outputs the sound at a predetermined volume (step S603) and terminates the sound output process. That is, because there is no other uttered sound that overlaps the sound, one sound is outputted at a predetermined volume, display size, or the like.

On the other hand, in a case where there is a plurality of the sound to be uttered (step S602; Yes), the relationship degree calculating unit 203 acquires a parameter indicating the relationship between each of the spectator character objects 402 that utters sound and the competitor character object 401 from the storage unit 201 (step S604). For example, the relationship degree calculating unit 203 acquires performance information or the like that is based on match-up history such as shown in FIG. 5A or numeric parameters such as shown in FIG. 5B.

The relationship degree calculating unit 203 acquires the rival coefficient between each of the spectator character objects 402 and the competitor character object 401 based on the parameter acquired in step S604 (step S605).

In a case where there are M number of spectator character objects 402 (where M is an integer greater than or equal to 1), the relationship degree calculating unit 203 acquires M number of rival coefficients respectively corresponding to the spectator character objects 402.

Furthermore, the relationship degree calculating unit 203 acquires the sound mixing ratio based on the acquired rival coefficients (step S606). That is, the relationship degree calculating unit 203 acquires the mixing ratio so that the larger the rival coefficient of the spectator character object 402 that has uttered a sound is, the larger the proportion in the overlapping sound becomes. Then, the relationship degree calculating unit 203 inputs the obtained mixing ratio to the sound output unit 202.

Subsequently, the sound output unit 202 mixes the sound based on the obtained mixing ratio, and outputs the mixed sound (step S607). For example, the volume of sound is set such that the higher its mixing ratio is, the louder the volume of the sound is.

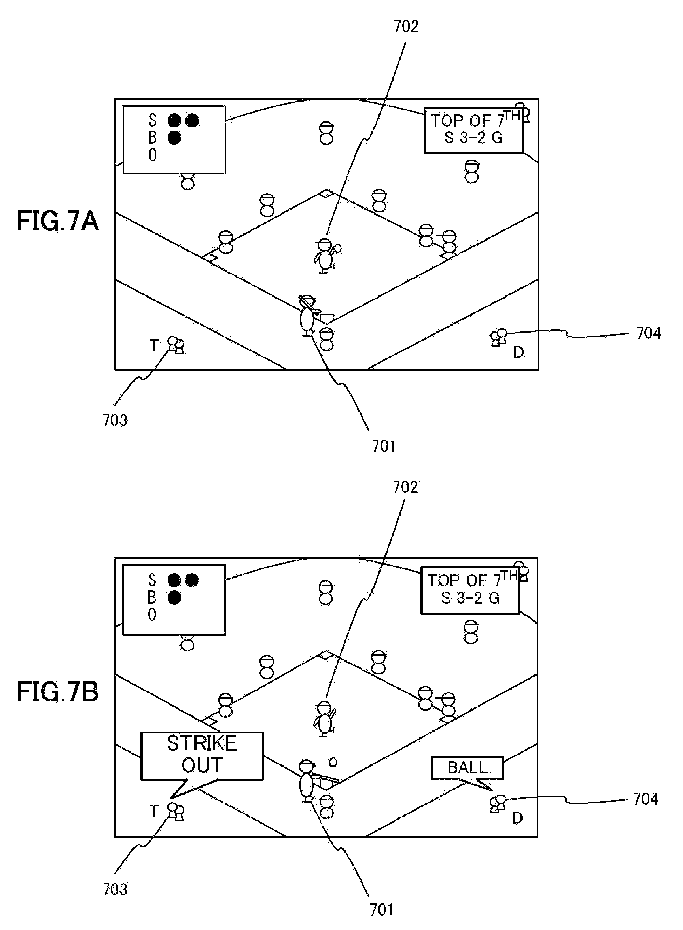

For example, it is supposed that the current game situation is as shown in FIG. 7A. In this figure, a first competitor character object 701 at bat (team G) and a second competitor character object 702 in the field (team S) are playing against each other, and a first spectator character object 703 (team T) and a second spectator character object 704 (team D) are watching the game. In other words, there are two competitor players 301: one at bat and the other in the field, and two spectator players 302 watching the game via the network 303. Further, a parameter indicating the relationship between the first competitor character object 701 at bat and the other character objects is stored in the storage unit 201 as in FIG. 5A and FIG. 5B.

At this time, it is assumed that sounds are simultaneously uttered toward team G by the spectator character objects 703 and 704 at a certain timing (for example, the game sounds to be uttered are "Strike Out" from team T and "Ball" from team D). The relationship degree calculating unit 203 then calculates the rival coefficient between the first competitor character object 701 (team G) and the first spectator character object 703 (team T), and the rival coefficient between the first competitor character object 701 (team G) and the second spectator character object 704 (team D). Furthermore, the sound output unit 202 mixes the sounds as shown in FIG. 7B using the ratio of the values of these rival coefficients as the sound mixing ratio, and outputs the mixed sound. For example, in a case where the ratio of the rival coefficient between team G and team T and the rival coefficient between team G and team D is 2 to 1, the sound output unit 202 relatively doubles the volume of the sound "Strike Out" to be uttered by team T in comparison to the sound "Ball" to be uttered by team D, and outputs the mixed sound. Or, the sound output unit 202 relatively doubles the size of the characters "Strike Out" to be uttered by team T in comparison to the characters "Ball" to be uttered by team D, and outputs the characters. That is, since team T is an opponent to be defeated closely to team G (since team T is a worthy opponent), the sound output unit 202 outputs sound while emphasizing the sound to be uttered by team T having a closer rival relationship.

Furthermore, the game situation, number of character objects, sound content, sound mixing ratio, and the like shown in this figure are merely examples, and do not limit the content of the present invention.

In this manner, according to the embodiment, the game device 200 changes the mixing ratio of the sounds to be outputted in accordance with the rival relationship, analogous relationship, acquaintance relationship, and the like of the character objects, thereby making it possible to change the presentation of the game so as to heighten the realistic sensation and cohesiveness of the game. Then, the game device 200 changes the volume of the sound or the display size according to the situation, making it possible to create a presentation appropriate for the relationship between the character objects. Further, the user can play the game while being aware of opponents having a rival relationship with him/herself, thereby increasing the realistic sensation and cohesiveness of the game as well as the device of the game. For example, the user can determine who is watching the game by the difference in volume.

In addition, before starting the sound output process or before the processing of step S601, the sound output unit 202 or the relationship degree calculating unit 203 may provide a step wherein the decision is made as to whether or not there are one or more spectator players 302 and, if there is not even one, not perform the sound output process or immediately terminate the sound output process. For example, the game device 200 may make a decision as to whether or not there is a spectator player 302 every certain time period (for example, every 10 seconds) during the game, or at a predetermined timing such as the start of an inning of a baseball game, and then determine whether or not to start the sound output process.

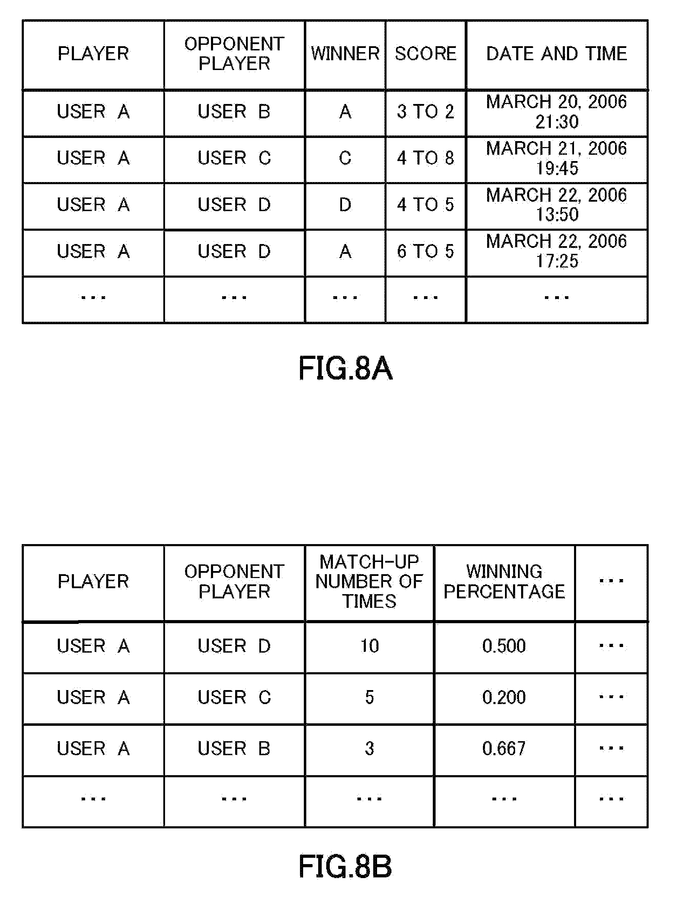

Further, the storage unit 201 may use a parameter assigned to a combination of players such as shown in FIG. 8A or FIG. 8B, instead of a parameter respectively assigned to each of the competitor character objects 401 associated with the competitor players 301 and the spectator character objects 402 associated with the spectator players 302. With this arrangement, regardless of the character object selected (regardless of the team selected) by the user, the game device 200 can perform the sound output process using the same rival coefficients.

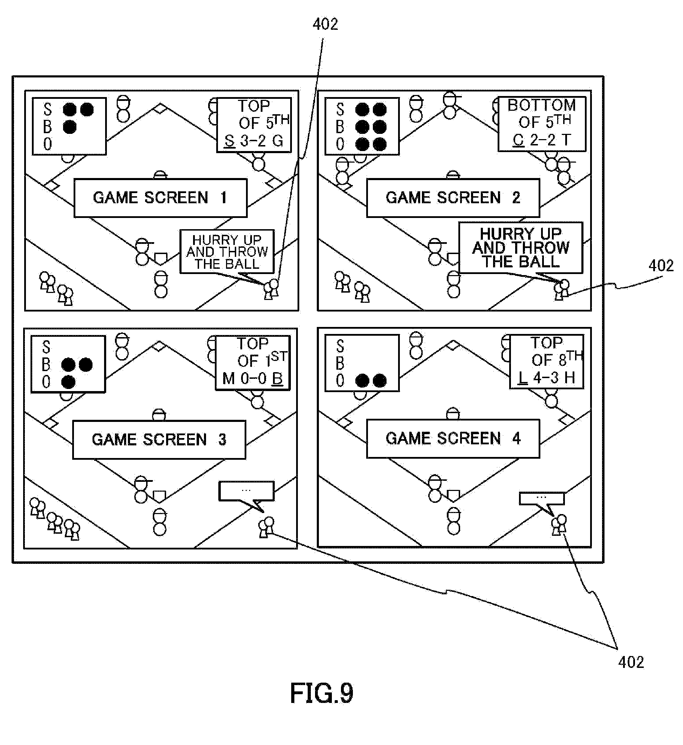

Further, as shown in FIG. 9, the sound output unit 202 and the relationship degree calculating unit 203 may execute control so that one of the spectator players 302 watches a plurality of game screens concurrently and utters different sounds at the same timing from each of the spectator character objects 402 corresponding to the spectator player 302. In this figure, the spectator player 302 watches four games concurrently. For example, it is assumed that the parameter stored in the storage unit 201 is the content shown in FIG. 5A or FIG. 5B, and the spectator player 302 is the player who leads "team G". Then, it is assumed that the spectator player 302 instructs the spectator character object 402 to jeer, "Hurry up and throw the ball". The relationship degree calculating unit 203 then acquires the respective rival coefficients in relation to the pitcher of the game screen 1 (team D in the field), the pitcher of the game screen 2 (team T in the field), the pitcher of game screen 3 (team M in the field), and the pitcher in game screen 4 (team H in the field). Subsequently, the relationship degree calculating unit 203 calculates for each of the games the sound mixing ratio based on the acquired rival coefficients, mixes the sounds, and outputs the mixed sound. For example, the sound is outputted the loudest in the game screen 2 where team T having the closest rival relationship with the spectator player 302 (team G) exists, and is outputted somewhat softly in the game screen 1 where team S having the second closest rival relationship with the spectator player 302 (team G) exists. In this manner, the game device 200 can output a sound based on the appropriate opponent relationship in each game, even in a case where a plurality of games are executed. In this case as well, the game device 200 can, for example, change the display size of the lines of the sound based on the rival coefficient.

Further, the spectator character object 402 corresponding to the spectator player 302 may be displayed or not displayed on the game screen displayed on the monitor. Or, even in a case where the spectator character object 402 is displayed, the identity of the spectator character object 402 may be displayed or not displayed as well. In this manner, the spectator player 302 and the spectator character object 402 are not clearly shown, making it possible for the competitor player 301 to play the game while being aware of whether or not another person with whom he/she shares a rival relationship (another person who is a worthy opponent to be defeated) is watching the game, thereby heightening the tension, realistic sensation, and cohesiveness of the game. For example, if a plurality of cheers and jeers are uttered in response to a play made by the competitor player 301 during the game and, among those cheers and jeers, a strikingly loud jeer is directed at the competitor player 301, the competitor player 301 can easily figure out that another person (a character object of another person) having a close rival relationship with him/herself is watching. Or, if a sound such as a cheer or jeer is uttered during the game by another person playing the game and the sound to be uttered is outputted at a strikingly loud volume, the competitor player 301 can figure out that the person or character object playing the game has a close rival relationship with him/herself.

Further, even in a case where there is only one spectator player 302, the rival coefficient may be calculated so that the output level (level of volume, display size, etc.) is changed based on the rival coefficient. In this case, the game may be configured so that steps equivalent to step S604 and step S605 are executed even in the case of "No" in step S602, and a sound is outputted in step S603 based on output levels set correspondingly in advance in response to rival coefficients. With this arrangement, even in a case where there is only one spectator player 302, the competitor player 301 can figure out that another person who is a worthy opponent having a rival relationship with him/herself is watching. This makes it possible to heighten the tension, realistic sensation, and cohesiveness of the game.

(Embodiment 2)

The following describes another embodiment of the present invention. In this embodiment, the parameter used by the relationship degree calculating unit 203 to acquire the value (rival coefficient) indicating the relationship between each of the character objects that utter sound and the player character object is expanded to two or more dimensions. The other configurations of the game device 200 according to this embodiment are the same as those of the foregoing embodiment, and descriptions thereof will be omitted.

The relationship degree calculating unit 203 performs calculations based on the size of the difference between a first vector having a numeric parameter of the competitor character object 401 as an element, and a second vector having a numeric parameter of the spectator character object 402 that utters sound as an element. Then, the sound output unit 202 mixes the sounds so that the larger the difference between the vector is, the smaller the mixing ratio of the spectator character object 402 that utters the sound is, and outputs the mixed sound.

Specifically, for example, the number of times of past games A1 and the total scores B1 in the games within a predetermined period (for example, one month) are used as the numeric parameters indicating the characteristics of a certain character object. The characteristics of one of the character objects are expressed as a first vector (A1, B1), and the characteristics of the other character object are expressed as a second vector (A2, B2). Then, it is assumed that the smaller the difference between these vector is, the closer the rival relationship (opponent relationship of a close rival to defeat) is, and conversely the larger the difference between these vector is, the further the rival relationship is.

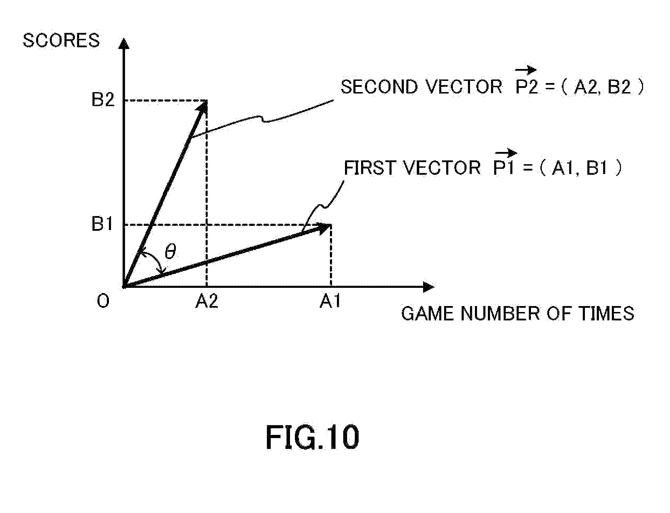

FIG. 10 is a diagram showing the relationship between these two vectors. In two-dimensional space expressed by the two numeric parameters of the number of times of game and the total scores are expressed, the characteristics of the character objects are expressed as vectors. Then, the difference between the characteristics of the two character objects is expressed as an angle $\theta$ formed by the two vectors (the difference between the orientations of the vectors) and the difference in the length of each vector. For example, the size of the difference between the characteristics of the two character objects can be expressed by the inner product of the two vectors. That is, the rival coefficient can be expressed by Equation 2.

$$\text{Equation 2}$$

$$\textbf{Rival coefficient} \; = \left|\vec{P1}\right| \cdot \left|\vec{P2}\right| \cdot \cos\theta$$

$$= A1 \cdot A2 + B1 \cdot B2$$

Where,

$$\vec{P1} = (A1, B1)$$

$$\vec{P2} = (A2, B2)$$

Generally, such inner product as expressed by this Equation 2 expresses to what extent the physical values (the parameters indicating the characteristics) of the two objects (character objects) are similar. The characteristics of a character object may be expressed by a vector of three-dimensional space using three parameters, or may be further expanded and expressed by a vector of N-dimensional space using N number of parameters (where N is an integer greater than or equal to 2). Further, the magnitude of the difference between the characteristics of the two character objects may be acquired using another arbitrary operation other than the inner product of the vectors.

While the above-mentioned number of times of game and total scores are used as the parameters indicating the characteristics of the character objects in the embodiment, other parameters may also be used. The elements of the vector may be performance data such as the number of times of game, the total score as well as the winning percentage, the ranking, number of times of wins/losses, etc., data that quantifies the level of the ability of each character object, and physical attributes (height, weight, age, etc.). For example, if the game is a baseball game, the batting average, runs batted in, number of home runs, number of stolen bases, earned run average, number of years affiliated with the team, and the like may be used. In the three-dimensional space having degrees of forte in running, offense, and defense as the three axes, each of the fortes can be quantified so as to define a vector indicating the characteristics of each character object.

The relationship degree calculating unit 203 calculates the rival coefficient between the competitor character object 401 and the spectator character object 402 using the Equation 2, etc., based on a plurality of parameters, such as the number of times of game and scores, stored in the storage unit 201 when the spectator character object 402 utters sound such as a cheer or jeer based on an instruction from the spectator player 302. Then, the sound output unit 202 determines the mixing ratio of the sounds, such as the cheers and jeers, uttered from the spectator character objects 402 based on the rival coefficients calculated by the relationship degree calculating unit 203, mixes the sounds at this mixing ratio, and outputs the mixed sound. For example, in a case where a plurality of spectator character objects 402 utter sounds such as cheers and jeers at the same timing, the relationship degree calculating unit 203 calculates the rival coefficient for each of the spectator character objects 402 that uttered sound using the Equation 2 or the like. Then, the mixing ratio of the sound to be uttered by a certain spectator character object 402 is set such that the larger the difference between the rival coefficient of the spectator character object 402 and another rival coefficient is, the smaller the mixing ratio is.

With this arrangement, even if the sounds such as the cheers and jeers to be uttered by the plurality of spectator character objects 402 overlap, each of the sounds are not outputted in the same way, but rather outputted so that the sounds of those spectator character objects 402 having a high rival coefficient are emphasized and outputted accordingly. For example, the sound output unit 202 executes control so that the larger the rival coefficient is, the relatively larger the volume of the sound outputted from the spectator is. Or, the sound output unit 202 may execute control so that larger the rival coefficient is, the larger the letters of lines displayed on the monitor is.

Or, in a case where the sounds such as cheers and jeers to be uttered by a plurality of spectator character objects 402 overlap, the relationship degree calculating unit 203 may acquire a vector indicating the characteristics for each of the spectator character objects 402 that uttered sound, and set the mixing ratio of the sound to be uttered by that spectator character object 402 such that the larger the degree of the angle θ formed by these vectors is. In this case, because the length of each vector (the value of the parameter indicating the characteristic) is not taken into consideration, the rival coefficient expresses the difference in directionality between the character objects. For example, there may be tendency of an opponent to "always play against team G", or "a difference between obtained points and lost points".

More specifically, the relationship degree calculating unit 203 may set the rival coefficient such that the larger the degree of the angle θ formed by each vector expressing the characteristics of the character object is, the larger the rival coefficient is. For example, it is assumed that the number of times of match-up, X, with team G and the total score Y in the match-ups with team G are used as the numeric parameters. The first vector based on these numeric parameters of a certain character object is expressed as (X1, Y1), and the second vector based on these numeric parameters of another character object is expressed as (X2, Y2). At this time, even if the elements X1 and X2 or elements Y1 and Y2 of each vector have different numeric values, the angle θ formed by these vectors shrinks as the analogous relationship is close. That is, even under conditions where X1 and X2 or Y1 and Y2 differ, these character objects can be deemed to have a close relationship (be rivals).

In this manner, according to the embodiment, the game device 200 presumes that the closeness of the rival relationship increases (the degree of the opponent relationship is close to the worthy rival to defeat) as the character objects have similar directionality, thereby making it possible to provide a presentation appropriate for the opponent relationship between the character objects. Further, the user can play the game while being aware of opponents having a rival relationship with him/herself, making it possible to increase the realistic sensation of the game and increase the interest of the game.

Note that the present invention is not limited to the above-described embodiments, and various modifications and applications can be made. Further, each of the above-described embodiments and modifications may also be freely used in combination.

For example, the present invention may be applied to a game in which the competitor players 301 and the spectator players 302 are not clearly divided, but are rather a plurality of players in a free-for-all state in a so-called battle royal system, enabling the players to be the competitor player 301 or the spectator player 302. For example, the present invention can also be used in a scene where sound to be uttered from a character object having similar ability and rival relationships, or a character object having a fateful relationship with a long match-up history is emphasized.

While the storage unit 201 records information such as the match-up history in the external memory 106 mounted to the interface 104 of the game device 200 in the foregoing embodiment, the device may be configured so that such information is recorded on another server device on the Internet connected via the NIC 109 and the relationship degree calculating unit 203 reads out the appropriate information from this server device so as to calculate the rival coefficient. In such a case, the configuration may be such that the CPU 101 transmits the game result and the like to this server device on the Internet each time the game is executed on the game device 200, and the server device stores the received information in association with the game device 200 or user specific information. Then, the CPU 101 may be configured to acquire information such as match-up history from the server device and acquire the rival coefficient at the timing in which the spectator character object 402 utters a sound or at the initial timing in which the spectator player 302 begins to participate in the game as a spectator. With this arrangement, the game device 200 no longer requires the provision of the external memory 106, and information such as match-up history can be retrieved at any time, regardless of which game device 200 is being used by the user to play the game. For example, that the user will never lose the external memory 106 to reset the match-up history information. Further, even if the format of the stored information changes due to a software version upgrade or the like, this configuration offers the advantage that only the data stored in the server device at one location need to be changed.

For example, the content of the present invention can also be applied to a system referred to as a chat system in which chatting takes place between network computers. In such a case, the storage unit 201 may store and centrally manage the parameters and the like described above on a server device that manages the chat system, the relationship degree calculating unit 203 may calculate a value indicating the level of comradeship, such as how well the users know each other based on the access count (a value equivalent to the rival coefficient described above), and the sound output unit 202 may mix the sounds accordingly and output the mixed sound. Particularly, the present invention is effective in use as a method for determining a priority order of outputting sounds in a conversation system, like a chat system involving voices, which may cause a bothersome problem that hearing a voice is difficult if the volumes of a plurality of sounds equally overlap.

For example, the program for operating the game device 200 as a system, in whole or in part, may be recorded on a computer-readable storage medium, such as a memory card, CD-ROM, DVD, or MO (Magneto Optical disk), distributed, installed in another computer, and operated as the above-described means or used to execute the above-described processing.

Furthermore, the program may be stored on a disk device, etc., of a server on the Internet and, for example, superimposed on carrier waves and downloaded to a computer.

The present invention claims priority based on Japanese Patent Application No. 2006-086209, the entire contents of which are incorporated herein by reference.

Industrial Applicability

As described above, according to the present invention, it is possible to reflect the opponent relationship between characters so as to output sounds accordingly in a game within virtual space.

**Claims**

1. A game device comprising:

a storage unit (201) which stores parameters respectively assigned to among a plurality of character objects a player character object associated with a player and other character objects;
a sound output unit (202) which mixes the respective sounds to be uttered by the other character objects, and outputs the mixed sound; and
a relationship degree calculating unit (203) which, in a case where the sounds to be uttered by any ones of a plurality of the other character objects overlap, calculates a value representing a relationship between each of the character objects uttering the sounds and the player character object based on a parameter stored in the storage unit (201);

wherein the sound output unit (202) acquires a mixing ratio of each of the sounds to be uttered by the other character objects based on the value calculated by the relationship degree calculating unit (203).

2. A game device comprising:

a storage unit (201) which stores for each of a plurality of character objects at least two numeric parameters indicating the performance of the character object, and at least two numeric parameters indicating the performance at match-ups with each of the other character objects;
a sound output unit (202) which mixes the respective sounds to be uttered by the character objects, and outputs the mixed sound; and
a relationship degree calculating unit (203) which, in a case where the sounds to be uttered by any ones of the plurality of the character objects overlap, calculates a degree of an angle formed by a vector composed of the numeric parameters, arranged in a predetermined order, of each of the character objects uttering the sound, the numeric parameters being stored in the storage unit (201), and a vector composed of the numeric parameters, arranged in the predetermined order, of the player character object stored in the storage unit (201), as a value representing a relationship between each of the character objects uttering the sounds and the player character object,

wherein the sound output unit (202) sets the volume of the sound to be uttered by the character objects such that the larger the degree of the angle calculated by the relationship degree calculating unit (203) is, the lower the volume of the sound is.

3. A game device comprising:

a storage unit (201) which stores for each of a plurality of character objects at least two numeric parameters indicating the performance of the character object, and at least two numeric parameters indicating the performance at match-ups with each of the other character objects;
a sound output unit (202) which mixes the respective sounds to be uttered by the character objects, and outputs the mixed sound; and
a relationship degree calculating unit (203) which, in a case where the sounds to be uttered by any ones of the plurality of character objects overlap, calculates magnitude of a difference between a vector composed of the numeric parameters, arranged in a predetermined order, of each of the character objects uttering the sound, the numeric parameters being stored in the storage unit (201), and a vector composed of the numeric parameters, arranged in the predetermined order, of the player character object, the numeric parameters being stored in the storage unit (201), as a value representing a relationship between each of the character objects uttering the sounds and the player character obj ect,

wherein the sound output unit (202) sets a mixing ratio of each of the sounds to be uttered by the character objects such that the larger the size of the difference calculated by the relationship degree calculating unit (203) is, the smaller the mixing ratio of the sound is.

4. A game device comprising:

a storage unit (201) which stores for each of a plurality of character objects at least two numeric parameters indicating the performance of the character object, and at least two numeric parameters indicating the performance at match-ups with each of the other character objects;
a sound output unit (202) which mixes the respective sounds to be uttered by the character objects, and outputs the mixed sound; and
a relationship degree calculating unit (203) which, in a case where any of the character objects utters sounds, calculates a degree of an angle formed by a vector composed of the numeric parameters, arranged in a predetermined order, of each of the character objects uttering the sound, the numeric parameters being stored in the storage unit (201), and a vector composed of the numeric parameters, arranged in the predetermined order, of the player character object, the numeric parameter being stored in the storage unit (201), as a value representing a relationship between each of the character objects uttering the sounds and the player character object,

wherein the sound output unit (202) sets the sounds to be uttered by each of the character objects such that the larger the degree of the angle calculated by the relationship degree calculating unit (203) is, the smaller the mixing ratio is.

5. A game device comprising:

a storage unit (201) which stores for each of a plurality of character objects at least two numeric parameters indicating the performance of the character object, and at least two numeric parameters indicating the performance at match-ups with each of the other character objects;
a sound output unit (202) which mixes the respective sounds to be uttered by the character objects, and outputs the mixed sound; and
a relationship degree calculating unit (203) which, in a case where any of the character objects utters sounds, calculates magnitude of a difference formed by a vector composed of the numeric parameters, arranged in a predetermined order, of each of the character objects uttering the sound, the numeric parameters being stored in the storage unit (201), and a vector composed of the numeric parameters, arranged in the predetermined order, of the player character object, the numeric parameters being stored in the storage unit (201), as a value representing a relationship between each of the character objects uttering the sounds and the player character object,

wherein the sound output unit (202) sets mixing ratios of the sounds to be uttered by the character objects such that the larger the magnitude of the difference calculated by the relationship degree calculating unit (203) is, the smaller the mixing ratio of the sound is.

6. A game processing method executed on a game device including a storage unit (201),
wherein the storage unit (201) stores parameters respectively assigned to among a plurality of character objects a player character object associated with a player and the other character objects, comprising:

a sound output step of mixing the respective sounds to be uttered by the other character objects, and outputting the mixed sound; and
a relationship degree calculating step of calculating, in a case where the sounds to be uttered by any ones of a plurality of the other character objects overlap, a value representing a relationship between each of the character objects uttering the sounds and the player character object based on a parameter stored in the storage unit (201),

wherein the sound output step acquires the mixing ratio of the sounds to be uttered by each of the other character objects based on the value calculated by the relationship degree calculating step.

7. A game processing method executed on a game device including a storage unit (201),

wherein the storage (201) unit stores for each of a plurality of character objects at least two numeric parameters indicating the performance of the character object, and at least two numeric parameters indicating the performance at match-ups with each of the other character objects, comprising:

a sound output step of mixing the respective sounds to be uttered by the character objects, and outputting the mixed sound; and

a relationship degree calculating step of calculating, in a case where the sounds to be uttered by any ones of the plurality of character objects overlap, a degree of an angle formed by a vector composed of the numeric parameters, arranged in a predetermined order, of each of the character objects uttering the sound, the numeric parameters being stored in the storage unit (201) and a vector composed of the numeric parameters, arranged in a predetermined order, of the player character object stored in the storage unit (201), as the values representing a relationship between each of the character objects uttering the sounds and the player character object,

wherein the sound output step sets the volume of the sound to be uttered by each of the character objects such that the larger the degree of the angle calculated by the relationship degree calculating step is, the lower the volume of the sound is.

8. A game processing method executed on a game device including a storage unit (201),
wherein the storage unit (201) stores for each of a plurality of character objects at least two numeric parameters indicating the performance of the character object, and at least two numeric parameters indicating the performance at match-ups with each of the other character objects, comprising:

a sound output step of mixing the respective sounds to be uttered by the character objects, and outputting the mixed sound; and

a relationship degree calculating step of calculating, in a case where the sounds to be uttered by any ones of the plurality of character objects overlap, magnitude of a difference formed by a vector composed of the numeric parameters, arranged in a predetermined order, of each of the character objects uttering the sound, the numeric parameters being stored in the storage unit (201), and a vector composed of numeric parameters, arranged in the predetermined order, of the player character object stored in the storage unit (201), as the values representing a relationship between each of the character objects uttering the sounds and the player character object,

wherein the sound output step sets the mixing ratios of the sounds to be uttered by the character objects such that larger the magnitude of the difference calculated by the relationship degree calculating step is, the smaller the mixing ratio is.

9. A game processing method executed on a game device including a storage unit (201),
wherein the storage unit (201) stores for each of a plurality of character objects at least two numeric parameters indicating the performance of the character object, and at least two numeric parameters indicating the performance at match-ups with each of the other character objects, comprising:

a sound output step of mixing the respective sounds to be uttered by the character objects, and outputting the mixed sound; and

a relationship degree calculating step of calculating, in a case where any of the character objects utters sounds, a degree of an angle formed by a vector composed of the numeric parameters, arranged in a predetermined order, of each of the character objects uttering the sound, the numeric parameters being stored in the storage unit (201), and a vector composed of the numeric parameters, arranged in the predetermined order, of the player character object, the numeric parameters being stored in the storage unit (201), as a value representing a relationship between each of the character objects uttering the sounds and the player character object,

wherein the sound output step sets the volume of the sounds to be uttered by the each of the character objects such that the larger the degree of the angle calculated by the relationship degree calculating step is, the lower the volume of the sound is.

10. A game processing method executed on a game device including a storage unit (201),
wherein the storage unit (201) stores for each of a plurality of character objects at least two numeric parameters indicating the performance of the character object, and at least two numeric parameters indicating the performance at match-ups with each of the other character objects, comprising:

a sound output step of mixing the respective sounds to be uttered by the character objects, and outputting the mixed sound; and

a relationship degree calculating step of calculating, in a case where any of the character objects utters sounds, magnitude of a difference formed by a vector which is composed of the numeric parameters, arranged in a predetermined order, of each of the character objects uttering the sound stored in the storage unit (201) and a vector composed of the numeric parameters, arranged in the predetermined order, of the player character object, the numeric parameters being stored in the storage unit (201), as a value representing a relationship between each of the character objects uttering the sounds and the player character object,

wherein the sound output step sets the mixing ratios of the sounds to be uttered by the character objects such that the larger the magnitude of the difference calculated by the relationship degree calculating step is, the smaller the mixing ratio of the sound is.

11. A computer-readable information recording medium storing a program for controlling a computer to function as:

a storage unit (201) which stores parameters respectively assigned to, among a plurality of character objects, a player character object associated with a player and the other character objects;

a sound output unit (202) which mixes the respective sounds to be uttered by the other character objects, and outputs the mixed sound; and

a relationship degree calculating unit (203) which, in a case where the sounds to be uttered by any ones of a plurality of the other character objects overlap, calculates a value representing a relationship between each of the character objects uttering the sounds and the player character object based on a parameter stored in the storage unit (201),

wherein the sound output unit (202) acquires the mixing ratio of each of the sounds to be uttered by the other character objects based on the value calculated by the relationship degree calculating unit (203).

12. A computer-readable information recording medium storing a program for controlling a computer to function as:

a storage unit (201) which stores for each of a plurality of character objects at least two numeric parameters indicating the performance of the character object, and at least two numeric parameters indicating the performance at match-ups with each of the other character objects;

a sound output unit (202) which mixes the respective sounds to be uttered by the character objects, and outputs the mixed sound; and

a relationship degree calculating unit (203) which, in a case where the sounds to be uttered by any ones of the plurality of character objects overlap, calculates a degree of an angle formed by a vector composed of the numeric parameters, arranged in a predetermined order, of each of the character objects uttering the sound, the numeric parameter being stored in the storage unit (201), and a vector composed of the numeric parameters, arranged in the predetermined order, of the player character object stored in the storage unit (201), as a value representing a relationship between each of the character objects uttering the sounds and the player character object,

wherein the sound output unit (203) sets the volume of the sound to be uttered by the character objects such that the larger the degree of the angle calculated by each of the relationship degree calculating unit (202) is, the lower the volume of the sound is.

13. A computer-readable information recording medium storing a program for controlling a computer to function as:

a storage unit (201) which stores for each of a plurality of character objects at least two numeric parameters indicating the performance of the character object, and at least two numeric parameters indicating the performance at match-ups with each of the other character objects;

a sound output unit (202) which mixes the respective sounds to be uttered by the character objects, and outputs the mixed sound; and

a relationship degree calculating unit (203) which, in a case where the sounds to be uttered by any ones of the plurality of character objects overlap, calculates magnitude of a difference formed by a vector composed of the numeric parameters, arranged in a predetermined order, of each of the character objects uttering the sound, the numeric parameters being stored in the storage unit (201), and a vector which is composed of the numeric parameters of the player character object, the numeric parameter being stored in the storage unit (201), as a value representing a relationship between each of the character objects uttering the sounds and the player character object,

wherein the sound output unit (202) sets the mixing ratio of each of the sounds to be uttered by the character objects such that the larger the magnitude of the difference calculated by the relationship degree calculating unit (203) is, the smaller the mixing ratio is.

**14.** A computer-readable information recording medium storing a program for controlling a computer to function as:

a storage unit (201) which stores for each of a plurality of character objects at least two types of numeric parameters indicating the performance of the character object, and at least two types of numeric parameters indicating the performance at match-ups with each of the other character objects;
a sound output unit (202) which mixes the respective sounds to be uttered by the character objects, and outputs the mixed sound; and
a relationship degree calculating unit (203) which, in a case where any of the character objects utters sounds, calculates a degree of an angle formed by a vector composed of the numeric parameters of each of the character objects uttering the sound, the numeric parameter being stored in the storage unit (201), and a vector composed of the numeric parameters, arranged in the predetermined order, of the player character object, the numeric parameters being stored in the storage unit (201), as the values representing a relationship between each of the character objects uttering the sounds and the player character object,

wherein the sound output unit (202) sets the volume of the sound to be uttered by the character objects such that the larger the degree of the angle calculated by the relationship degree calculating unit (203) is, the lower the volume of the sound is.

**15.** A computer-readable information recording medium storing a program for controlling a computer to function as:

a storage unit (201) which stores for each of a plurality of character objects at least two types of numeric parameters indicating the performance of the character object, and at least two types of numeric parameters indicating the performance at match-ups with each of the other character objects;
a sound output unit (202) which mixes the respective sounds to be uttered by the character objects, and outputs the mixed sound; and
a relationship degree calculating unit (203) which, in a case where any of the character objects utters sounds, calculates magnitude of a difference formed by a vector composed of the numeric parameters, arranged in a predetermined order, of each of the character objects uttering the sound, the numeric parameters being stored in the storage unit (201), and a vector composed of the numeric parameters, arranged in a predetermined order, of the player character object, the numeric parameters being stored in the storage unit (201), as a value representing a relationship between each of the character objects uttering the sounds and the player character object,

wherein the sound output unit (202) sets the mixing ratios of the sounds to be uttered by the character objects such that the larger the magnitude of the difference calculated by the relationship degree calculating unit (203) is, the smaller the mixing ratio of the sound is.

**16.** A program for controlling a computer to function as:

a storage unit (201) which stores parameters respectively assigned to, among a plurality of character objects, a player character object associated with a player and the other character objects;
a sound output unit (202) which mixes the respective sounds to be uttered by the other character objects, and outputs the mixed sound; and
a relationship degree calculating unit (203) which, in a case where the sounds to be uttered by any ones of a plurality of the other character objects overlap, calculates a value representing a relationship between each of the character objects uttering the sounds and the player character object based on a parameter stored in the storage unit (201),

wherein the sound output unit (202) sets the mixing ratios of the sounds to be uttered by the other character objects based on the value calculated by the relationship degree calculating unit (203).

**17.** A program for controlling a computer to function as:

a storage unit (201) which stores for each of a plurality of character objects at least two numeric parameters indicating the performance of the character object, and at least two numeric parameters indicating the performance at match-ups with each of the other character objects;

a sound output unit (202) which mixes the respective sounds to be uttered by the character objects, and outputs the mixed sound; and

a relationship degree calculating unit (203) which, in a case where the sounds to be uttered by any ones of the plurality of character objects overlap, calculates a degree of an angle formed by a vector composed of the numeric parameters, arranged in a predetermined order, of each of the character objects uttering the sound stored in the storage unit (201), and a vector composed of the numeric parameters, arranged in a predetermined order, of the player character object stored in the storage unit (201), as a value representing a relationship between each of the character objects uttering the sounds and the player character object,

wherein the sound output unit (203) sets the volume of the sound to be uttered by each of the character objects such that the larger the degree of the angle calculated by the relationship degree calculating unit (202) is, the lower the volume of the sound is.

**18.** A program for controlling a computer to function as:

a storage unit (201) which stores for each of a plurality of character objects at least two numeric parameters indicating the performance of the character object, and at least two numeric parameters indicating the performance at match-ups with each of the other character objects;

a sound output unit (202) which mixes the respective sounds to be uttered by the character objects, and outputs the mixed sound; and

a relationship degree calculating unit (203) which, in a case where the sounds to be uttered by any ones of the plurality of character objects overlap, calculates magnitude of a difference formed by a vector composed of the numeric parameters, arranged in a predetermined order, of each of the character objects uttering the sound, the numeric parameters being stored in the storage unit (201) and a vector composed of the numeric parameters, arranged in the predetermined order, of the player character object stored in the storage unit (201), as a value representing a relationship between each of the character objects uttering the sounds and the player character object,

wherein the sound output unit (202) sets the mixing ratio of each of the sounds to be uttered by the character objects such that the larger the magnitude of the difference calculated by the relationship degree calculating unit (203) is, the smaller the mixing ratio of the sound is.

**19.** A program for controlling a computer to function as:

a storage unit (201) which stores for each of a plurality of character objects at least two numeric parameters indicating the performance of the character object, and at least two numeric parameters indicating the performance at match-ups with each of the other character objects;

a sound output unit (202) which mixes the respective sounds to be uttered by the character objects, and outputs the mixed sound; and

a relationship degree calculating unit (203) which, in a case where any of the character objects utters sounds, calculates a degree of an angle formed by a vector which is composed of the numeric parameters, arranged in a predetermined order, of each of the character objects uttering the sound stored in the storage unit (201), and a vector composed of the numeric parameters, arranged in the predetermined order, of the player character object, the numeric parameters being stored in the storage unit (201), as the values representing a relationship between each of the character objects uttering the sounds and the player character object,

wherein the sound output unit (202) sets the volume of sound to be uttered by each of the character objects such that the larger the degree of the angle calculated by the relationship degree calculating unit (203) is, the lower the volume of the sound is.

**20.** A program for controlling a computer to function as:

a storage unit (201) which stores for each of a plurality of character objects at least two numeric parameters indicating the performance of the character object, and at least two numeric parameters indicating the performance at match-ups with each of the other character objects;

a sound output unit (202) which mixes the respective sounds to be uttered by the character objects, and outputs the mixed sound; and

a relationship degree calculating unit (203) which, in a case where any of the character objects utters sounds, calculates magnitude of a difference between a vector composed of the numeric parameters, arranged in the predetermined order, of each of the character objects uttering the sound stored in the storage unit (201), and a vector which is composed of the numeric parameters, arranged in a predetermined order, of the player character object stored in the storage unit (201), as the values representing a relationship between each of the character objects uttering the sounds and the player character object,

wherein the sound output unit (202) sets the mixing ratios of the sounds to be uttered by the character objects such that the larger the magnitude of the difference calculated by the relationship degree calculating unit (203) is, the smaller the mixing ratio is.

FIG.1

TO INTERNET

NIC — 109

IMAGE PROCESSOR — 107

TO MONITOR

RAM — 103

ROM — 102

CPU — 101

SOUND PROCESSOR — 110

TO SPEAKER

DVD-ROM DRIVE — 108

INTERFACE — 104

EXTERNAL MEMORY — 106

105

100

FIG.2

302 200 302 200

...

303

301 200 200 301

...

**FIG.3**

FIG.4

| CHARACTER OBJECT (OWN) | CHARACTER OBJECT (OPPONENT) | WINNER | SCORE | DATE AND TIME |
|---|---|---|---|---|
| TEAM G | TEAM S | G | 3 TO 2 | MARCH 20, 2006 21:30 |
| TEAM G | TEAM D | D | 4 TO 8 | MARCH 21, 2006 19:45 |
| TEAM G | TEAM T | T | 4 TO 5 | MARCH 22, 2006 13:50 |
| TEAM G | TEAM T | G | 6 TO 5 | MARCH 22, 2006 17:25 |
| ... | ... | ... | ... | ... |

## FIG.5A

| CHARACTER OBJECT (OWN) | CHARACTER OBJECT (OPPONENT) | MATCH-UP NUMBER OF TIMES | WINNING PERCENTAGE | ... |
|---|---|---|---|---|
| TEAM G | TEAM T | 10 | 0.500 | ... |
| TEAM G | TEAM D | 5 | 0.200 | ... |
| TEAM G | TEAM S | 3 | 0.667 | ... |
| ... | ... | ... | ... | ... |

## FIG.5B

```
              ┌─────────────────────┐
              │    SOUND OUTPUT      │
              │     PROCESS          │
              └─────────────────────┘
                        │
                        ▼
                                        S601
          ╱────────────────────────────╲
   NO    ╱      SPECTATOR                ╲
 ◄───────      CHARACTER OBJECT           
         ╲     UTTER SOUND ?             ╱
          ╲────────────────────────────╱
                        │
                       YES
                        │
                        ▼
                                        S602
          ╱────────────────────────────╲       NO
         ╱      A PLURALITY OF           ╲───────────────►
          ╲        SOUNDS ?             ╱
          ╲────────────────────────────╱
                        │
                       YES
                        │
                        ▼
     ┌──────────────────────────────────┐  S604
     │  ACQUIRE INFORMATION SUCH AS      │
     │  MATCH-UP HISTORY WITH EACH       │
     │  SPECTATOR CHARACTER OBJECT       │
     └──────────────────────────────────┘
                        │
                        ▼
     ┌──────────────────────────────────┐  S605
     │  ACQUIRE RIVAL COEFFICIENT        │
     │  WITH EACH SPECTATOR              │
     │  CHARACTER OBJECT                 │
     └──────────────────────────────────┘
                        │
                        ▼
     ┌──────────────────────────────────┐  S606
     │     ACQUIRE MIXING RATIO          │
     └──────────────────────────────────┘
                        │
                        ▼                                        S603
   ┌──────────────────────────────┐  S607    ┌─────────────────────────────┐
   │  MIX SOUNDS AT ACQUIRED RATIO │          │     OUTPUT SOUND             │
   │  AND OUTPUT MIXED SOUND       │          │  AT PREDETERMINED VOLUME     │
   └──────────────────────────────┘          └─────────────────────────────┘
                        │
                        ▼
              ┌─────────────────────┐
              │         END         │
              └─────────────────────┘
```

FIG.6

FIG.7A

FIG.7B

| PLAYER | OPPONENT PLAYER | WINNER | SCORE | DATE AND TIME |
|--------|-----------------|--------|-------|---------------|
| USER A | USER B | A | 3 TO 2 | MARCH 20, 2006 21:30 |
| USER A | USER C | C | 4 TO 8 | MARCH 21, 2006 19:45 |
| USER A | USER D | D | 4 TO 5 | MARCH 22, 2006 13:50 |
| USER A | USER D | A | 6 TO 5 | MARCH 22, 2006 17:25 |
| . . . | . . . | . . . | . . . | . . . |

# FIG.8A

| PLAYER | OPPONENT PLAYER | MATCH-UP NUMBER OF TIMES | WINNING PERCENTAGE | . . . |
|--------|-----------------|--------------------------|--------------------|-------|
| USER A | USER D | 10 | 0.500 | . . . |
| USER A | USER C | 5 | 0.200 | . . . |
| USER A | USER B | 3 | 0.667 | . . . |
| . . . | . . . | . . . | . . . | . . . |

# FIG.8B

FIG.9

SCORES

B2

SECOND VECTOR $\vec{P2} = ( A2, B2 )$

FIRST VECTOR $\vec{P1} = ( A1, B1 )$

B1

$\theta$

O A2 A1 GAME NUMBER OF TIMES

FIG.10

<table>
<tr><td colspan="2" align="center"><b>INTERNATIONAL SEARCH REPORT</b></td><td>International application No.<br>PCT/JP2007/055913</td></tr>
</table>

A.  CLASSIFICATION OF SUBJECT MATTER
*A63F13/00*(2006.01)i, *A63F13/12*(2006.01)i, *G10L13/00*(2006.01)i, *G10L13/02* (2006.01)i

According to International Patent Classification (IPC) or to both national classification and IPC

B.  FIELDS SEARCHED

Minimum documentation searched (classification system followed by classification symbols)
A63F13/00, A63F13/12, G10L13/00, G10L13/02

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2005-204948 A  (Namco Ltd.),<br>04 August, 2005 (04.08.05),<br>Par. Nos. [0057] to [0058]; Figs. 1 to 14<br>(Family: none) | 1,6,11,16<br>2-5,7-10,<br>12-15,17-20 |
| Y<br>A | JP 2005-46282 A  (Kabushiki Kaisha Konami<br>Computer Entertainment Tokyo),<br>24 February, 2005 (24.02.05),<br>Par. Nos. [0021] to [0022], [0026] to [0028],<br>[0031] to [0034]; Figs. 1 to 10<br>(Family: none) | 1,6,11,16<br>2-5,7-10,<br>12-15,17-20 |

☐  Further documents are listed in the continuation of Box C.      ☐  See patent family annex.

| | | |
|---|---|---|
| * | Special categories of cited documents: | |
| "A" | document defining the general state of the art which is not considered   to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

Date of the actual completion of the international search
04 April, 2007 (04.04.07)

Date of mailing of the international search report
17 April, 2007 (17.04.07)

Name and mailing address of the ISA/
Japanese Patent Office

Authorized officer

Facsimile No.

Telephone No.

Form PCT/ISA/210 (second sheet) (April 2005)

**EP 2 000 188 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3464469 B
- JP 3560956 B
- JP 2006086209 A